(19) Europäisches Patentamt
European Patent Office
Office européen des brevets

(11) EP 1 631 640 B1

(12) **EUROPEAN PATENT SPECIFICATION**

(45) Date of publication and mention of the grant of the patent:
**20.01.2010 Bulletin 2010/03**

(21) Application number: **04752674.4**

(22) Date of filing: **19.05.2004**

(51) Int Cl.:
***C09J 123/08*** *(2006.01)* ***C08L 23/08*** *(2006.01)*

(86) International application number:
**PCT/US2004/015697**

(87) International publication number:
**WO 2004/104127 (02.12.2004 Gazette 2004/49)**

(54) **NOVEL MULTIFUNCTIONAL POLYMER FOR USE IN HOT MELT ADHESIVE APPLICATIONS**

NEUES MULTIFUNKTIONELLES POLYMER FÜR SCHMELZKLEBEZWECKE

NOUVEAU POLYMERE MULTIFONCTIONNEL DESTINE A DES APPLICATIONS D'ADHESIFS THERMOFUSIBLES

(84) Designated Contracting States:
**DE ES FR GB IT**

(30) Priority: **19.05.2003 US 471318 P**
**19.09.2003 US 666488**

(43) Date of publication of application:
**08.03.2006 Bulletin 2006/10**

(73) Proprietor: **HRD Corp**
**Houston, TX 77245 (US)**

(72) Inventors:
- **HASSAN, Aziz**
**Sugarland, TX 77478 (US)**
- **BORSINGER, Gregory**
**Chatham, NJ 07928 (US)**
- **KARJALA, Teresa, P.**
**Lake Jackson, TX 77566 (US)**

(74) Representative: **Curell Aguilà, Mireia et al**
**CURELL SUÑOL S.L.P.**
**Passeig de Gràcia 65 bis**
**08008 Barcelona (ES)**

(56) References cited:
**US-A- 5 530 054**
**US-B1- 6 221 448**
**US-B1- 6 319 979**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 631 640 B1

Printed by Jouve, 75001 PARIS (FR)

## Description

FIELD OF THE INVENTION.

The present invention is a novel hot melt adhesive composition consisting essentially of a selected ethylene/alpha-olefin interpolymer, and optionally one or more tackifiers. Unlike conventional hot melt adhesives, which consist of three separate components, a polymer, a wax, and a tackifier, the hot melt adhesive of the present invention employs an ethylene/α-olefin interpolymer. This interpolymer is carefully selected as to its composition and properties, so as to function, in an adhesive composition, as both the polymer and the wax. Thus, the adhesive can comprise either a single component for low tack applications, or a simple two component adhesive for applications that require the addition of a tackifier.

BACKGROUND OF THE INVENTION

Hot melt adhesives ("HMA's") are ubiquitous in many areas of commerce including consumer and industrial packaging where a bond is required between a substrate and a second item. They are routinely used in the manufacture of corrugated cartons, boxes and the like. They are also used in diverse areas, such as bookbinding; sealing the ends of paper bags; furniture manufacturing; manufacture of particleboard, linerboard, various other paper goods, and for adhering other articles, such as glass, metals and various plastics, including attaching paper labels to plastic containers. Additional uses of hot-melt adhesives also include carpet seam sealing tape, lamination, product assembly, non-woven construction, and potting and encapsulation compounds.

Because of these diverse applications, hot melt adhesives may be required to maintain a strong bond over a wide range of temperature conditions. For example, in the manufacture of corrugated cartons used for shipping refrigerated or frozen foods, or foods packed in ice, hot melt adhesives are generally selected because of their ability to maintain a strong bond under low temperature conditions. However in other applications the hot melt adhesive may have to maintain a strong bond to the substrate under extremes of stress and shock in handling, and high humidity.

Unlike other adhesives, which are often applied as a solution in a solvent, HMA's are generally solids, and, in commercial applications, are typically applied to substrates in their molten state at temperatures of about 177 degrees C (350 degrees F.). As the molten adhesive cools and solidifies, a bond is formed between the substrate and the second item. Various techniques can be used to apply hot melt adhesives to a substrate including roll coaters, knife coaters and spray devices.

Two other important factors in hot melt adhesive performance are the so-called "set time" and "open time" of the adhesive. The "open time" of a hot melt adhesive is the time it takes to solidify to a point where it can no longer bond with the intended article. The "set time" of a hot melt adhesive is the time required for the adhesive to cool to the point where it has enough strength to form a bond. Set speed is an important parameter for applications such as high speed packaging lines, where bonding needs to occur rapidly to avoid poorly sealed or unsealed boxes.

Most hot melt adhesives are mixtures of three components: a wax, a tackifying agent and a polymeric resin. Although each component is generally present in roughly equal proportions in an HMA formulation, their relative ratio is often "fine tuned" for a particular application's need.

The polymer component provides the strength to the adhesive bond. The tackifier provides tack to the adhesive by improving wetting, which serves to secure the items to be bonded while the adhesive sets, and reduces the viscosity of the system making the adhesive easier to apply to the substrate. The wax shortens the open time and also reduces the viscosity of the system. In general, the percent wax is minimized and added in quantities sufficient to achieve the desired viscosity and set speeds.

A number of hot melt adhesive formulations utilize a vinyl acetate ("VA") polymer as the polymer component and the formulations are varied according to the vinyl acetate content of the polymer. Low vinyl acetate content polymers are preferred due to their lower cost, and as they are relatively non polar, they can be formulated with other relatively non-polar tackifiers and waxes to yield compatible formulations. Higher vinyl acetate content polymer resins (with greater than about 18% vinyl acetate content) when used in hot melt adhesive formulations result in a stronger ionic bond to polar substrates such as paper, thereby creating a stronger adhesive. However, the use of higher vinyl acetate content polymers requires formulating with more polar waxes and tackifiers to maintain formulation compatibility. More polar waxes, such as Fischer-Tropsch ("FT") waxes are generally more expensive than paraffin wax and the selection and supply of these more polar waxes is limited. They are difficult to obtain domestically and are thus potentially subject to supply interruptions caused by world events.

In addition to bonding requirements, HMA's require performance in other areas such as thermal and oxidative stability. Holt melt adhesives are applied in a molten state; consequently many applications involve prolonged exposure to high temperatures. Good thermal and oxidative stability means that the HMA will not darken nor produce a char or skin or gel, nor will it exhibit a substantial viscosity change over time. Such charring, skinning, gel formation and/or

viscosity changes also increase the propensity of the formulation to cause plugged lines and nozzles while in use, as in industrial applications. The introduction of any wax into an HMA formulation, and especially the more polar waxes, tends to lower the formulation's thermal and oxidative stability.

Hot melt adhesives comprised of ethylene polymers other than those incorporating vinyl acetate have also been disclosed in the prior art. For instance, U.S. Patent No. 5,021,257, issued on June 4th, 1991, to Foster et al., discloses a hot- melt adhesive composition having a viscosity of about 30 to about 250 grams/(cm.second) (about 3,000 to about 25,000 centipoise) at 135°C, and a Ring and Ball softening point of about 90°C to about 125°C, said adhesive composition comprising a blend of at least one substantially amorphous propylene/hexene copolymer, at least one tackifier, and at least one substantially crystalline, low viscosity hydrocarbon wax.

U.S. Pat. No. 5,530,054, issued Jun. 25, 1996 to Tse et al., claims a hot melt adhesive composition consisting essentially of: (a) 30 percent to 70 percent by weight of a copolymer of ethylene and about 6 percent to about 30 percent by weight of a $C_3$ to $C_{20}$ $\alpha$-olefin produced in the presence of a catalyst composition comprising a metallocene and an alumoxane and having an $M_W$ of from about 20,000 to about 100,000; and (b) a hydrocarbon tackifier which is selected from a recited list.

U.S. Pat. No. 5,548,014, issued Aug. 20, 1996 to Tse et al., claims a hot melt adhesive composition comprising a blend of ethylene/alpha-olefin copolymers wherein the first copolymer has a Mw from about 20,000 to about 39,000 and the second copolymer has a $M_W$ from about 40,000 to about 100,000. Each of the hot melt adhesives exemplified comprises a blend of copolymers, with at least one of the copolymers having a polydispersity greater than 2.5. Furthermore, the lowest density copolymer exemplified has a specific gravity of 0.894 g/cm$^3$.

U.S. Patent No. 6,107,430, issued on August 22, 1991, to Dubois et al., discloses hot melt adhesives comprising at least one homogeneous linear or substantially linear interpolymer of ethylene with at least one $C_2$ - $C_{20}$ $\alpha$-olefin interpolymer having a density from 0.850 to 0.895 g/cm$^3$, optionally at least one tackifying resin; and optionally at least one wax, wherein the hot melt adhesive has a viscosity of less than about 50 grams/(cm.second) (about 5000 cP) at 150°C.

Also, EP 0 886 656 B1, published on September 19, 2001, to Simmons et al., discloses hot melt adhesives comprising from 5 to 95 weight percent at least one homogeneous linear or substantially linear interpolymer of ethylene with at least one $\alpha$-olefin interpolymer having a polydispersity index, Mw/Mn, of from 1.5 to 2.5, and a density from 0.850 to 0.885 g/cm$^3$, from 5 to 95 weight percent of at least one tackifying resin; and optionally at least one wax.

Tse, in Application of Adhesion Model for Developing Hot Melt Adhesives Bonded to Polyolefin Surfaces, Journal of Adhesion, Vol. 48, Issue 1-4, pp. 149-167, 1995, notes that compared with hot melt adhesives based on ethylene-vinyl acetate copolymer, hot melt adhesives based on homogeneous linear ethylene/alpha-olefin interpolymers show higher viscosity and inferior tensile strength, but better bond strength to polyolefin surfaces, higher strain at break and lower yield stress.

Hot melt adhesives comprising these polymers can be made which match the strength performance of the vinyl-acetate containing HMA formulations, but their ability to be formulated with non polar tackifiers render the resulting hot melt formulation more thermally stable than vinyl acetate containing hot melt adhesives.

However, neither the prior art involving vinyl acetate-based adhesives nor the prior art involving non-vinyl acetate containing polymer-based adhesives anticipates the present invention whereby a single synthetic polymer can be created that can substitute for both the wax and polymer components of a hot melt adhesive formulation.

Such a low cost hot melt adhesive formulation, which is composed from a single component (other than a tackifier) and which can be shipped and unloaded in molten form would be highly advantageous. It would also be highly advantageous to have an HMA formulation, which can be prepared with a minimum of mixing steps, thus minimizing the cost and variability of the formulation. It would also be highly advantageous to have an HMA formulation which is able to match the adhesion performance of HMA's comprising high VA containing ethylene-vinyl acetate ("EVA") polymers but without the requirement of incorporating expensive petroleum waxes that are primarily imported and/or derived from imported oil based feedstocks. It would also be highly advantageous if such hot melt adhesive formulations were able to exhibit the strength and adhesion characteristics of the EVA-containing formulations while having good thermal and oxidative stability.

The HMAs of the present invention comprise a single polymer component, which functions as both the polymer and the wax, and which can readily be shipped and/or unloaded in a molten state. For low tack applications, no additional components are required whereas for higher tack applications one or more tackifiers can be added. Thus the HMA compositions of the present invention require a minimum of mixing steps, each of which introduce both additional cost and variability to the final HMA formulation. The HMA compositions of the present invention can function without the requirement of an expensive polar wax in the formulation.

The HMA compositions of the present invention also exhibit adhesion and strength properties that are comparable to those of commercially available EVA-containing hot melt adhesives, and also exhibit good thermal and oxidative stability. In addition, the HMA compositions of the present invention provide a composition that, when applied to consumer packaging that is subsequently recycled, can be recycled more easily than conventional hot melt adhesives due to elimination of the wax component and/or the reduced amounts of tackifier.

Finally, the formulations of the present invention provide a composition for use in hot melt adhesives and for paper coating that has properties that are generally regarded as safe by the Food and Drug Administration.

BRIEF SUMMARY OF THE INVENTION

The present invention comprises hot melt adhesive compositions having one or more tackifiers and an ethylene/α-olefin interpolymer. These ethylene/α-olefin polymers were synthesized using either a single or a dual metallocene catalyst polymerization process.

An embodiment of the present invention is a hot melt adhesive composition consisting essentially of:

A) from about 60 to 85 percent by weight (based on the final weight of the hot melt adhesive composition) of a homogenous ethylene/α-olefin interpolymer; the homogenous ethylene/α-olefin interpolymer being characterised by having a number average molecular weight (Mn) of from about 1000 to about 7000) and
B) from 15 to about 40 percent by weight (based on the final weight of the hot melt adhesive composition) of one or more tackifiers, wherein in the adhesive composition:
C) the homogenous ethylene/α-olefin interpolymer is further characterized by having:

i) a density of from about 0.880 to about 0.930 g/$cm^3$; and
ii) a Brookfield Viscosity (measured at 149°C (300°F)) of from about 5 to about 70 grams/(cm second) (about 500 to about 7,000 cP); and

D) the hot melt adhesive composition is characterised by having:

i) a Brookfield Viscosity (measured at 177°C (350°F)) of from about 4 to about 20 grams/(cm second) (about 400 to about 2,000 cP);
ii) a Peel Adhesion Failure Temperature ("PAFT") of greater than or equal to 43°C (110°F); and
iii) a Shear Adhesion Failure Temperature ("SAFT") of greater than or equal to 60°C (140°F).

In another embodiment, the present invention is a cellulosic article formed using a hot melt adhesive composition, the adhesive composition consisting essentially of:

A) from about 60 to about 85 percent by weight (based on the final weight of the hot melt adhesive composition) of an homogeneous ethylene/α-olefin interpolymer, the homogeneous ethylene/α-olefin interpolymer being characterized by having a number average molecular weight (Mn) of from about 1,000 to about 7,000; and
B) from 15 to about 40 percent by weight (based on the final weight of the hot melt adhesive composition) of one or more tackifiers, and wherein in the hot melt adhesive composition:
C) the homogeneous ethylene/α-olefin interpolymer is further characterized by having:

i) a density of from about 0.880 to about 0.930 g/$cm^3$; and
ii) a Brookfield Viscosity (measured at 149°C) ((300°F)) of from about 5 to about 70 grams/(cm.second) (about 500 to about 7,000 cP); and

D) the hot melt adhesive composition is characterized by having:

i) a Brookfield Viscosity (measured at 177°C) ((350°F)) of from about 4 to about 20 grams/(cm.second) (about 400 to about 2,000 cP);
ii) a Peel Adhesion Failure Temperature ("PAFT") of greater than or equal to 43°C (110°F); and
iii) a Shear Adhesion Failure Temperature ("SAFT") of greater than or equal to 60°C (140°F).

DETAILED DESCRIPTION OF THE INVENTION

Unless indicated otherwise, the following testing procedures and definitions are to be employed:

Melt index ($I_2$), is measured in accordance with ASTM D-1238, condition 190°C/2.16 kg (formally known as "Condition (E)").

Molecular weight is determined using gel permeation chromatography (GPC) on a Waters 150°C high temperature chromatographic unit equipped with three mixed porosity columns (Polymer Laboratories 103, 104, 105, and 106),

operating at a system temperature of 140°C. The solvent is 1,2,4-trichlorobenzene, from which 0.3 percent by weight solutions of the samples are prepared for injection. The flow rate is 1.0 mL/min. and the injection size is 100 microliters.

The molecular weight determination is deduced by using narrow molecular weight distribution polystyrene standards (from Polymer Laboratories) in conjunction with their elution volumes. The equivalent polyethylene molecular weights are determined by using appropriate Mark-Houwink coefficients for polyethylene and polystyrene (as described by Williams and Word in Journal of Polymer Science, Polymer Letters, Vol. 6, (621) 1968) to derive the following equation:

$$M_{polyethylene} = a * (M_{polystyrene})^b.$$

In this equation, a = 0.4316 and b = 1.0. Weight average molecular weight, $M_W$, is calculated in the usual manner according to the following formula: $M_W = \Sigma w_i^* M_i$, where $w_i$ and $M_i$ are the weight fraction and molecular weight, respectively, of the ith fraction eluting from the GPC column.

Melt viscosity is determined in accordance with the following procedure using a Brookfield Laboratories DVII+ Viscometer in disposable aluminum sample chambers. The spindle used is a SC-31 hot-melt spindle, suitable for measuring viscosities in the range of from 0.1 to 1000 grams/(cm.second) (10 to 100,000 centipoise). A cutting blade is employed to cut samples into pieces small enough to fit into the 2.54 cm (1 inch) wide, 12.7 cm (5 inches) long sample chamber. The sample is placed in the chamber, which is in turn inserted into a Brookfield Thermosel and locked into place with bent needle-nose pliers. The sample chamber has a notch on the bottom that fits the bottom of the Brookfield Thermosel to ensure that the chamber is not allowed to turn when the spindle is inserted and spinning. The sample is heated to the desired temperature, such as 149°C (300°F.) or 177°C (350°F.), with additional sample being added until the melted sample is about 2.54 cm (1 inch) below the top of the sample chamber. The viscometer apparatus is lowered and the spindle submerged into the sample chamber. Lowering is continued until brackets on the viscometer align on the Thermosel. The viscometer is turned on, and set to a shear rate which leads to a torque reading in the range of 30 to 60 percent. Readings are taken every minute for about 15 minutes, or until the values stabilize, which final reading is recorded.

Percent crystallinity is determined by differential scanning calorimetry using a TA-Q1000. The percent crystallinity may be calculated with the equation

$$\text{percent C} = (A/292\ J/g) \times 100,$$

wherein percent C represents the percent crystallinity and A represents the heat of fusion of the ethylene in Joules per gram (J/g).

Density is measured in accordance with ASTM D-792. The samples are annealed at ambient conditions for 24 hours before the measurement is taken.

Comonomer and monomer incorporation was determined using nuclear magnetic resonance (NMR) spectroscopy. $^{13}C$ NMR analysis was used to determine ethylene content and comonomer content using the following procedures:.

$^{13}C$ NMR analysis

The samples were prepared by adding approximately 3g of a 50/50 mixture of tetrachloroethane-d2/orthodichlorobenzene that is 0.025M in chromium acetylacetonate (relaxation agent) to 0.4g sample of polymer in a 10mm NMR tube. The samples were dissolved and homogenized by heating the tube and its contents to 150°C. The data was collected using a Varian Unity Plus 400MHz spectrometer, corresponding to a $^{13}C$ resonance frequency of 100.4 MHz. Acquisition parameters were selected to ensure quantitative $^{13}C$ data acquisition in the presence of the relaxation agent. The data was acquired using gated $^1H$ decoupling, 4000 transients per data file, a 6sec pulse repetition delay, spectral width of 24,200Hz and a file size of 32K data points, with the probe head heated to 130°C.

The term "interpolymer" is used herein to indicate a copolymer, or a terpolymer, or the like. That is, at least one other comonomer is polymerized with ethylene to make the interpolymer.

The term "narrow composition distribution" used herein describes the comonomer distribution for homogeneous interpolymers. The narrow composition distribution homogeneous interpolymers can also be characterized by their SCBDI (short chain branch distribution index) or CDBI (composition distribution branch index). The SCBDI or CBDI is defined as the weight percent of the polymer molecules having a comonomer content within 50 percent of the median total molar comonomer content.

The CDBI of a polymer is readily calculated from data obtained from techniques known in the art, such as, for example, temperature rising elution fractionation (abbreviated herein as "TREF") as described, for example, in Wild et al, Journal Of Polymer Science, Poly. Phys. Ed., Vol. 20, p. 441 (1982), or in U.S. Patent No. 5,548,014. Thus, the following procedure for calculating CDBI can be used:

(1) Generate a normalized, cumulative distribution plot of copolymer concentration versus elution temperature, obtained from the TREF.
(2) Determine the elution temperature at which 50 weight percent of the dissolved copolymer has eluted.
(3) Determine the molar comonomer content within the copolymer fraction eluting at that median elution temperature.
(4) Calculate limiting mole fraction values of 0.5 times and 1.5 times the molar comonomer content within the copolymer fraction eluting at that median temperature.
(5) Determine limiting elution temperature values associated with those limiting mole fraction values.
(6) Partially integrate that portion of the cumulative elution temperature distribution between those limiting elution temperature values.
(7) Express the result of that partial integration, CDBI, as a percentage of the original, normalized, cumulative distribution plot.

a) Homogeneous Ethylene/alpha-Olefin Interpolymer Component

By the term "homogeneous interpolymer" is used herein to indicate a linear or substantially linear ethylene interpolymer prepared using a constrained geometry or single site metallocene catalyst. By the term homogeneous, it is meant that any comonomer is randomly distributed within a given interpolymer molecule and substantially all of the interpolymer molecules have the same ethylene/comonomer ratio within that interpolymer. The melting peak of homogeneous linear and substantially linear ethylene polymers, as determined by differential scanning calorimetry (DSC), will broaden as the density decreases and/or as the number average molecular weight decreases.

The homogeneous linear or substantially linear ethylene polymers can be characterized as having a narrow molecular weight distribution (Mw/Mn). For the linear and substantially linear ethylene polymers, the Mw/Mn is preferably from 1.5 to 2.5, preferably from 1.8 to 2.2. However, certain interpolymers of the present invention may have much larger values of Mw/Mn, and still exhibit excellent adhesive properties.

It is important to note that the ethylene polymers useful in the invention differ from low density polyethylene prepared in a high pressure process. In one regard, whereas low density polyethylene is an ethylene homopolymer having a density of from 0.900 to 0.935 g/cm$^3$, the ethylene polymers useful in the invention require the presence of a comonomer to reduce the density to less than 0.935 g/cm$^3$.

Substantially linear ethylene polymers are homogeneous polymers having long chain branching. The long chain branches have the same comonomer distribution as the polymer backbone and can be as long as about the same length as the length of the polymer backbone. When a substantially linear ethylene polymer is employed in the practice of the invention, such polymer may be characterized as having a polymer backbone substituted with from 0.1 to 3 long chain branches per 1000 carbons.

For quantitative methods for determination, see, for instance, U. S. Pat. Nos. 5,272,236 and 5,278,272; Randall (Rev. Macromol. Chem. Phys. , C29 (2 &3), p. 285-297), which discusses the measurement of long chain branching using $^{13}$C nuclear magnetic resonance spectroscopy, Zimm, G. H. and Stockmayer, W. H., J. Chem. Phys., 17, 1301 (1949); and Rudin, A., Modem Methods of Polymer Characterization, John Wiley & Sons, New York (1991) pp. 103-112, which discuss the use of gel permeation chromatography coupled with a low angle laser light scattering detector ("GPC-LALLS") and gel permeation chromatography coupled with a differential viscometer detector ("GPC-DV").

The homogeneous linear or substantially linear ethylene polymer will be an interpolymer of ethylene with at least one $\alpha$- olefin. When ethylene propylene diene terpolymers ("EPDM's") are prepared, the dienes are typically non-conjugated dienes having from 6 to 15 carbon atoms. Representative examples of suitable non-conjugated dienes that may be used to prepare the terpolymers include:

(a) Straight chain acyclic dienes such as 1,4-hexadiene; 1,5-heptadiene; and 1,6-octadiene;

(b) Branched chain acyclic dienes such as 5-methyl-1,4-hexadiene; 3,7-dimethyl-1,6-octadiene; and 3,7-dimethyl-1,7-octadiene;

(c) Single ring alicyclic dienes such as 4-vinylcyclohexene; 1-allyl-4-isopropylidene cyclohexane; 3-allylcyclopentene; 4-allylcyclohexene; and 1-isopropenyl-4-butenylcyclohexene;

(d) Multi-ring alicyclic fused and bridged ring dienes such as dicyclopentadiene; alkenyl, alkylidene, cycloalkenyl,

and cycloalkylidene norbornenes, such as 5-methylene-2-norbomene; 5-methylene-6-methyl-2-norbomene; 5-methylene-6,6-dimethyl-2-norbomene; 5-propenyl-2-norbornene; 5-(3-cyclopentenyl)-2-norbornene; 5-ethylidene-2-norbomene; 5-cyclohexylidene-2-norbornene; etc.

The preferred dienes are selected from the group consisting of 1,4-hexadiene; dicyclopentadiene; 5-ethylidene-2-norbornene; 5-methylene-2-norbornene; 7-methyl-1,6 octadiene; 4-vinylcyclohexene; etc. One preferred conjugated diene, which may be employed is piperylene.

Most preferred are interpolymers of ethylene with at least one $C_3$ -$C_{30}$ $\alpha$-olefins (for instance, propylene, isobutylene, 1-butene, 1- pentene, 1-hexene, 4-methyl-1-pentine, and 1-octene), with interpolymers of ethylene with at least one $C_4$ - $C_{20}$ $\alpha$-olefin, particularly at least one $C_7$ -$C_{30}$ $\alpha$-olefin, being most preferred.

The SCBDI or CDBI for the narrow composition distribution homogeneous interpolymers used in the present invention is density (and to a lesser extent molecular weight) dependent. For polymers having densities less than 0.898 g/cm$^3$ the CDBI values, (as defined in US Pat No. 5,548,014), are less than 70%. For interpolymers having densities greater than or equal to 0.898 g/cm$^3$ the CDBI values, (as defined in US Pat No. 5,548,014), are greater than or equal to 70%.

The homogeneous interpolymer used in the present invention is a homogeneous polymer of ethylene with at least one ethylenically unsaturated monomer, conjugated or nonconjugated diene, polyene, etc.

Homogeneously branched linear ethylene/$\alpha$-olefin interpolymers may be prepared using polymerization processes (such as is described by Elston in U.S. Pat. No. 3,645,992) which provide a homogeneous short chain branching distribution. In his polymerization process, Elston uses soluble vanadium catalyst systems to make such polymers. However, others such as Mitsui Petrochemical Company and Exxon Chemical Company have used so-called single site metallocene catalyst systems to make polymers having a homogeneous linear structure. Homogeneous linear ethylene/$\alpha$-olefin interpolymers are currently available from Mitsui Petrochemical Company under the tradename "TAFMER™" and from Exxon Chemical Company under the tradename "EXACT™".

Substantially linear ethylene/$\alpha$-olefin interpolymers are available from The Dow Chemical Company as AFFINITY™ polyolefin plastomers. Substantially linear ethylene/.alpha.-olefin interpolymers may be prepared in accordance with the techniques described in U.S. Pat. No. 5,272,236 and in U.S. Pat. No. 5,278,272.

The present invention is a polymer composition, derived from ethylene and alpha olefin, which can be used as an alternative to conventional hot melt adhesives that are subsequently used to bond articles, yet which composition yields adhesive properties similar to adhesives containing polymer, wax and tackifier.

The present inventors have discovered that use of a specific type of homogeneous interpolymer can unexpectedly be used by itself or in combination with a tackifier to produce commercially acceptable hot melt adhesives. The present invention is a hot melt adhesive comprising a specific synthetic interpolymer that, when combined with a suitable tackifier, can be used as an alternative to hot melt adhesive formulations that incorporate a three-component wax, polymer and tackifier mixture.

The homogenous interpolymer used in the hot melt adhesive formulations of the present invention may be prepared using the constrained geometry catalysts disclosed in U.S. Patents No. 5,064,802, No. 5,132,380, No. 5,703,187, No. 6,034,021, EP 0 468 651, EP 0 514 828, WO 93/19104, and WO 95/00526. Another suitable class of catalysts is the metallocene catalysts disclosed in U.S. Patents No. 5,044,438; No. 5,057,475; No. 5,096,867; and No. 5,324,800. It is noted that constrained geometry catalysts may be considered as metallocene catalysts, and both are sometimes referred to in the art as single-site catalysts.

For example, catalysts may be selected from the metal coordination complexes corresponding to the formula:

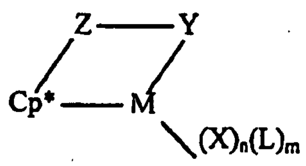

Formula I

wherein: M is a metal of group 3, 4-10, or the lanthanide series of the periodic table of the elements; Cp* is a cyclopentadienyl or substituted cyclopentadienyl group bound in an $\eta^5$ bonding mode to M; Z is a moiety comprising boron, or a member of group 14 of the periodic table of the elements, and optionally sulfur or oxygen, the moiety having up to 40 non-hydrogen atoms, and optionally Cp* and Z together form a fused ring system; X independently each occurrence is an anionic ligand group, said X having up to 30 non-hydrogen atoms; n is 2 less than the valence of M when Y is anionic,

or 1 less than the valence of M when Y is neutral; L independently each occurrence is a neutral Lewis base ligand group, said L having up to 30 non-hydrogen atoms; m is 0,1, 2, 3, or 4; and Y is an anionic or neutral ligand group bonded to Z and M comprising nitrogen, phosphorus, oxygen or sulfur and having up to 40 non-hydrogen atoms, optionally Y and Z together form a fused ring system.

Suitable catalysts may also be selected from the metal coordination complex which corresponds to the formula:

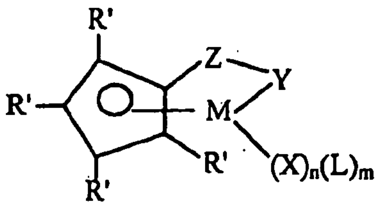

Formula II

wherein R' each occurrence is independently selected from the group consisting of hydrogen, alkyl, aryl, silyl, germyl, cyano, halo and combinations thereof having up to 20 non-hydrogen atoms; X each occurrence independently is selected from the group consisting of hydride, halo, alkyl, aryl, silyl, germyl, aryloxy, alkoxy, amide, siloxy, and combinations thereof having up to 20 non-hydrogen atoms; L independently each occurrence is a neutral Lewis base ligand having up to 30 non-hydrogen atoms; Y is -O-, -S-, -NR*-, -PR*-, or a neutral two electron donor ligand selected from the group consisting of OR*, SR*, $NR^*_2$, $PR^*_2$; M, n, and m are as previously defined; and Z is $SIR^*_2$, $CR^*_2$, $SiR^*_2SiR^*_2$, $CR^*_2CR^*_2$, CR*=CR*, $CR^*_2SiR^*_2$, $GeR^*_2$, BR*, $BR^*_2$; wherein: R* each occurrence is independently selected from the group consisting of hydrogen, alkyl, aryl, silyl, halogenated alkyl, halogenated aryl groups having up to 20 non-hydrogen atoms, and mixtures thereof, or two or more R* groups from Y, Z, or both Y and Z form a fused ring system.

It should be noted that whereas formula I and the following formulas indicate a monomeric structure for the catalysts, the complex may exist as a dimer or higher oligomer.

Further preferably, at least one of R', Z, or R* is an electron donating moiety. Thus, highly preferably Y is a nitrogen or phosphorus containing group corresponding to the formula -N(R"")-or -P(R"")-, wherein R"" is $C_{1-10}$ alkyl or aryl, i.e., an amido or phosphido group.

Additional catalysts may be selected from the amidosilane- or amidoalkanediyl-compounds corresponding to the formula:

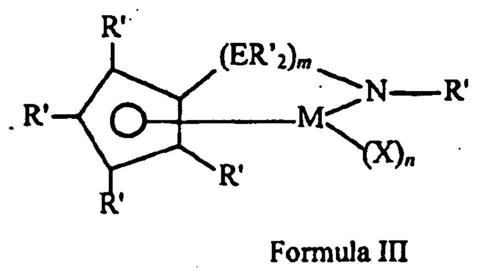

Formula III

wherein: M is titanium, zirconium or hafnium, bound in an $\eta^5$ bonding mode to the cyclopentadienyl group; R' each occurrence is independently selected from the group consisting of hydrogen, silyl, alkyl, aryl and combinations thereof having up to 10 carbon or silicon atoms; E is silicon or carbon; X independently each occurrence is hydride, halo, alkyl, aryl, aryloxy or alkoxy of up to 10 carbons; m is 1 or 2; and n is 1 or 2 depending on the valence of M.

Examples of the above metal coordination compounds include, but are not limited to, compounds in which the R' on the amido group is methyl, ethyl, propyl, butyl, pentyl, hexyl, (including isomers), norbornyl, benzyl, phenyl, etc.; the cyclopentadienyl group is cyclopentadienyl, indenyl, tetrahydroindenyl, fluorenyl, octahydrofluorenyl, etc.; R' on the foregoing cyclopentadienyl groups each occurrence is hydrogen, methyl, ethyl, propyl, butyl, pentyl, hexyl, (including isomers), norbornyl, benzyl, phenyl, etc.; and X is chloro, bromo, iodo, methyl, ethyl, propyl, butyl, pentyl, hexyl, (including isomers), norbornyl, benzyl, phenyl, etc.

Specific compounds include, but are not limited to, (tertbutylamido)(tetramethyl-$\eta^5$-cyclopentadienyl)-1,2-ethanediylzirconium dimethyl, (tert-butylamido) (tetramethyl-$\eta^5$-cyclo penta dienyl)-1,2-ethanediyltitanium dimethyl, (methylamido) (tetramethyl-$\eta^5$-cyclopenta dienyl)-1,2-ethanediylzirconium dichloride, (methylamido)(tetramethyl-$\eta^5$-eyelopenta dienyl)-1,2-ethane diyltitanium dichloride, (ethylamido)(tetramethyl-$\eta^5$-cyclopentadienyl)-methylenetita-

nium dichloro, (tertbutylamido)diphenyl(tetramethyl-$\eta^5$-cyclopentadienyl)-silane zirconium dibenzyl, (benzylamido)dimethyl-(tetramethyl-$\eta^5$-cyclopentadienyl) ilanetitaniumdichloride, phenylphosphido)dimethyl(tetramethyl-$\eta^5$-cyclopentadienyl) silane zirconium dibenzyl, and the like.

Another suitable class of catalysts is substituted indenyl containing metal complexes as disclosed in U.S. Patents No. 5,965,756 and No. 6,015,868. Other catalysts are disclosed in copending applications: U.S. Application Serial No. 09/230,185; and No. 09/715,380, and U.S. Provisional Application Serial No. 60/215,456; No. 60/170,175, and No. 60/393,862. These catalysts tend to have a higher molecular weight capability.

One class of the above catalysts is the indenyl containing metal wherein:

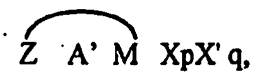

Formula IV

M is titanium, zirconium or hafnium in the +2, +3 or +4 formal oxidation state;

A' is a substituted indenyl group substituted in at least the 2 or 3 position with a group selected from hydrocarbyl, fluoro-substituted hydrocarbyl, hydrocarbyloxy-substituted hydrocarbyl, dialkylamino- substituted hydrocarbyl, silyl, germyl and mixtures thereof, the group containing up to 40 non-hydrogen atoms, and the A' further being covalently bonded to M by means of a divalent Z group; Z is a divalent moiety bound to both A' and M via σ-bonds, the Z comprising boron, or a member of Group 14 of the Periodic Table of the Elements, and also comprising nitrogen, phosphorus, sulfur or oxygen; X is an anionic or dianionic ligand group having up to 60 atoms exclusive of the class of ligands that are cyclic, delocalized, n-bound ligand groups; X' independently each occurrence is a neutral Lewis base, having up to 20 atoms; p is 0, 1 or 2, and is two less than the formal oxidation state of M, with the proviso that when X is a dianionic ligand group, p is 1; and q is 0, 1 or 2.

The above complexes may exist as isolated crystals optionally in pure form or as a mixture with other complexes, in the form of a solvated adduct, optionally in a solvent, especially an organic liquid, as well as in the form of a dimer or chelated derivative thereof, wherein the chelating agent is an organic material, preferably a neutral Lewis base, especially a trihydrocarbylamine, trihydrocarbylphosphine, or halogenated derivative thereof.

Preferred catalysts are complexes corresponding to the formula:

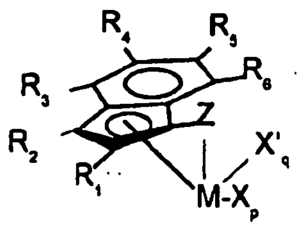

Formula V

wherein $R_1$ and $R_2$ independently are groups selected from hydrogen, hydrocarbyl, perfluoro substituted hydrocarbyl, silyl, germyl and mixtures thereof, the group containing up to 20 non-hydrogen atoms, with the proviso that at least one of $R_1$ or $R_2$ is not hydrogen; $R_3$, $R_4$, $R_5$, and $R_6$ independently are groups selected from hydrogen, hydrocarbyl, perfluoro substituted hydrocarbyl, silyl, germyl and mixtures thereof, the group containing up to 20 non-hydrogen atoms; M is titanium, zirconium or hafnium; Z is a divalent moiety comprising boron, or a member of Group 14 of the Periodic Table of the Elements, and also comprising nitrogen, phosphorus, sulfur or oxygen, the moiety having up to 60 non-hydrogen atoms; p is 0, 1 or 2; q is zero or one; with the proviso that: when p is 2, q is zero, M is in the +4 formal oxidation state, and X is an anionic ligand selected from the group consisting of halide, hydrocarbyl, hydrocarbyloxy, di(hydrocarbyl) amido, di(hydrocarbyl)phosphido, hydrocarbyl sulfido, and silyl groups, as well as halo-, di(hydrocarbyl)amino-, hydrocarbyloxy- and di(hydrocarbyl)phosphino-substituted derivatives thereof, the X group having up to 20 non-hydrogen atoms, when p is 1, q is zero, M is in the +3 formal oxidation state, and X is a stabilizing anionic ligand group selected from the group consisting of allyl, 2-(N,N-dimethylaminomethyl)phenyl, and 2-(N,N-dimethyl)-aminobenzyl, or M is in the +4 formal oxidation state, and X is a divalent derivative of a conjugated diene, M and X together forming a metallocyclopentene group, and when p is 0, q is 1, M is in the +2 formal oxidation state, and X' is a neutral, conjugated or non-conjugated diene, optionally substituted with one or more hydrocarbyl groups, the X' having up to 40 carbon atoms and forming a $\pi$-complex with M.

More preferred catalysts are complexes corresponding to the formula:

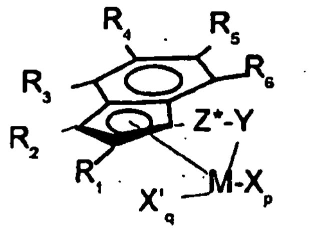

Formula VI

wherein: $R_1$ and $R_2$ are hydrogen or $C_{1-6}$ alkyl, with the proviso that at least one of $R_1$ or $R_2$ is not hydrogen; $R_3$, $R_4$, $R_5$, and $R_6$ independently are hydrogen or $C_{1-6}$ alkyl; M is titanium; Y is -O-, -S-, -NR*-, -PR*-; Z* is $SiR^*_2$, $CR^*_2$, $SiR^*_2SiR^*_2$, $CR^*_2CR^*_2$, CR*=CR*, $CR^*_2SiR^*_2$, or $GeR^*_2$; R* each occurrence is independently hydrogen, or a member selected from hydrocarbyl, hydrocarbyloxy, silyl, halogenated alkyl, halogenated aryl, and combinations thereof, the R* having up to 20 non-hydrogen atoms, and optionally, two R* groups from Z (when R* is not hydrogen), or an R* group from Z and an R* group from Y form a ring system; p. is 0, 1 or 2; q is zero or one; with the proviso that: when p is 2, q is zero, M is in the +4 formal oxidation state, and X is independently each occurrence methyl or benzyl, when p is 1, q is zero, M is in the +3 formal oxidation state, and X is 2-(N,N-dimethyl)aminobenzyl; or M is in the +4 formal oxidation state and X is 1,4-butadienyl, and when p is 0, q is 1, M is in the +2 formal oxidation state, and X' is 1,4-diphenyl-1,3-butadiene or 1,3-pentadiene. The latter diene is illustrative of unsymmetrical diene groups that result in production of metal complexes that are actually mixtures of the respective geometrical isomers.

Other catalysts, cocatalysts, catalyst systems, and activating techniques which may be used in the practice of the invention disclosed herein may include those disclosed in; US Patent 5,616,664, WO 96/23010, published on August 1, 1996, WO 99/14250, published March 25, 1999, WO 98/41529, published September 24, 1998, WO 97/42241, published November 13, 1997, WO 97/42241, published November 13, 1997, those disclosed by Scollard, et al., in J. Am. Chem. Soc 1996, 118, 10008 - 10009, EP 0 468 537 B1, published November 13, 1996, WO 97/22635, published June 26, 1997, EP 0 949 278 A2, published October 13, 1999; EP 0 949 279 A2, published October 13, 1999; EP 1 063 244 A2, published December 27, 2000; US Patent 5,408,017; US Patent 5,767,208; US Patent 5,907,021; WO 88/05792, published August 11, 1988; WO88/05793, published August 11,1988; WO 93/25590, published December 23, 1993;US Patent 5,599,761; US Patent 5,218,071; WO 90/07526, published July 12, 1990; US Patent 5,972,822; US Patent 6,074,977; US Patent 6,013,819; US Patent 5,296,433; US Patent 4,874,880; US Patent 5,198,401; US Patent 5,621,127; US Patent 5,703,257; US Patent 5,728,855; US Patent 5,731,253; US Patent 5,710,224; US Patent 5,883,204; US Patent 5,504,049; US Patent 5,962,714; US Patent 5,965,677; US Patent 5,427,991; WO 93/21238, published October 28,1993; WO 94/03506, published February 17, 1994; WO 93/21242, published October 28, 1993; WO 94/00500, published January 6, 1994, WO 96/00244, published January 4, 1996, WO 98/50392, published November 12, 1998; Wang, et al., Organometallics 1998, 17,3149-3151; Younkin, et al., Science 2000, 287, 460-462, Chen and Marks, Chem. Rev. 2000, 100, 1391-1434, Alt and Koppl, Chem. Rev. 2000; 100, 1205-1221; Resconi, et al., Chem. Rev. 2000, 100, 1253-1345; Ittel, et al., ChemRev. 2000, 100, 1169-1203; Coates, Chem. Rev., 2000, 100, 1223-1251; WO 96/13530, published May 9, 1996. Also useful are those catalysts, cocatalysts, and catalyst systems disclosed in USSN 09/230,185, filed January 15, 1999; US Patent 5,965,756; US 6,150,297; USSN 09/715,380, filed November 17,2000. In addition, methods for preparing the aforementioned catalysts are described, for example, in U.S. Patent No. 6,015,868.

**Cocatalysts:**

The above-described catalysts may be rendered catalytically active by combination with an activating cocatalyst or by use of an activating technique. Suitable activating cocatalysts for use herein include, but are not limited to, polymeric or oligomeric alumoxanes, especially methylalumoxane, triisobutyl aluminum modified methylalumoxane, or isobutylalumoxane; neutral Lewis acids, such as $C_{1-30}$ hydrocarbyl substituted Group 13 compounds, especially tri(hydrocarbyl) aluminum- or tri(hydrocarbyl)boron compounds and halogenated (including perhalogenated) derivatives thereof, having from 1 to 30 carbons in each hydrocarbyl or halogenated hydrocarbyl group, more especially perfluorinated tri(aryl)boron and perfluorinated tri(aryl)aluminum compounds, mixtures of fluoro-substituted(aryl)boron compounds with alkyl-containing aluminum compounds, especially mixtures of tris(pentafluorophenyl)borane with trialkylaluminum or mixtures of

tris(pentafluorophenyl)borane with alkylalumoxanes, more especially mixtures of tris(pentafluorophenyl)borane with methylalumoxane and mixtures of tris(pentafluorophenyl)borane with methylalumoxane modified with a percentage of higher alkyl groups (MMAO), and most especially tris(pentafluorophenyl)borane and tris(pentafluorophenyl)aluminum; non-polymeric, compatible, non-coordinating, ion forming compounds (including the use of such compounds under oxidizing conditions), especially the use of ammonium-, phosphonium-, oxonium-, carbonium-, silylium- or sulfonium-salts of compatible, non-coordinating anions, or ferrocenium salts of compatible, non-coordinating anions; bulk electrolysis and combinations of the foregoing activating cocatalysts and techniques. The foregoing activating cocatalysts and activating techniques have been previously taught with respect to different metal complexes in the following references: EP-A-277,003, US-A-5,153,157, US-A-5,064,802, EP-A-468,651 (equivalent to U. S. Serial No. 07/547,718), EP-A-520,732 (equivalent to U. S. Serial No. 07/876,268), and EP-A-520,732 (equivalent to U. S. Serial Nos. 07/884,966 filed May 1, 1992).

Combinations of neutral Lewis acids, especially the combination of a trialkyl aluminum compound having from 1 to 4 carbons in each alkyl group and a halogenated tri(hydrocarbyl)boron compound having from 1 to 20 carbons in each hydrocarbyl group, especially tris(peritafluorophenyl)borane, further combinations of such neutral Lewis acid mixtures with a polymeric or oligomeric alumoxane, and combinations of a single neutral Lewis acid, especially tris(pentafluorophenyl)borane with a polymeric or oligomeric alumoxane are especially desirable activating cocatalysts. It has been observed that the most efficient catalyst activation using such a combination of tris(pentafluoro-phenyl)borane/alumoxane mixture occurs at reduced levels of alumoxane. Preferred molar ratios of Group 4 metal complex:tris(pentafluoro-phenylborane:alumoxane are from 1:1:1 to 1:5:10, more preferably from 1:1:1 to 1:3:5. Such efficient use of lower levels of alumoxane allows for the production of olefin polymers with high catalytic efficiencies using less of the expensive alumoxane cocatalyst. Additionally, polymers with lower levels of aluminum residue, and hence greater clarity, are obtained.

Suitable ion forming compounds useful as cocatalysts in some embodiments of the invention comprise a cation which is a Bronsted acid capable of donating a proton, and a compatible, non-coordinating anion, $A^-$. As used herein, the term "non-coordinating" means an anion or substance which either does not coordinate to the Group 4 metal containing precursor complex and the catalytic derivative derived therefrom, or which is only weakly coordinated to such complexes thereby remaining sufficiently labile to be displaced by a neutral Lewis base. A non-coordinating anion specifically refers to an anion which, when functioning as a charge balancing anion in a cationic metal complex, does not transfer an anionic substituent or fragment thereof to the cation thereby forming neutral complexes during the time which would substantially interfere with the intended use of the cationic metal complex as a catalyst. "Compatible anions" are anions which are not degraded to neutrality when the initially formed complex decomposes and are non-interfering with desired subsequent polymerization or other uses of the complex.

Preferred anions are those containing a single coordination complex comprising a charge-bearing metal or metalloid core which anion is capable of balancing the charge of the active catalyst species (the metal cation) which may be formed when the two components are combined. Also, the anion should be sufficiently labile to be displaced by olefinic, diolefinic and acetylenically unsaturated compounds or other neutral Lewis bases such as ethers or nitriles. Suitable metals include, but are not limited to, aluminum, gold and platinum. Suitable metalloids include, but are not limited to, boron, phosphorus, and silicon. Compounds containing anions which comprise coordination complexes containing a single metal or metalloid atom are, of course, known in the art and many, particularly such compounds containing a single boron atom in the anion portion, are available commercially.

Preferably such cocatalysts may be represented by the following general formula:

$$(L^*\text{-}H)_d^+ \, (A)^{d-} \qquad \text{Formula VII}$$

wherein L* is a neutral Lewis base; (L*-H)+ is a Bronsted acid; $A^{d-}$ is an anion having a charge of d-, and d is an integer from 1 to 3. More preferably $A^{d-}$ corresponds to the formula: $[M'Q_4]^-$, wherein M' is boron or aluminum in the +3 formal oxidation state; and Q independently each occurrence is selected from hydride, dialkylamido, halide, hydrocarbyl, hydrocarbyloxide, halosubstituted-hydrocarbyl, halosubstituted hydrocarbyloxy, and halo-substituted silylhydrocarbyl radicals (including perhalogenated hydrocarbyl- perhalogenated hydrocarbyloxy- and perhalogenated silylhydrocarbyl radicals), the Q having up to 20 carbons with the proviso that in not more than one occurrence is Q halide. Examples of suitable hydrocarbyloxide Q groups are disclosed in U. S. Patent 5,296,433.

In a more preferred embodiment, d is one, that is, the counter ion has a single negative charge and is $A^-$. Activating cocatalysts comprising boron which are particularly useful in the preparation of catalysts of this invention may be represented by the following general formula:

$$(L^*\text{-}H)^+(M'Q_4)^-; \qquad \text{Formula VIII}$$

wherein L* is as previously defined; M' is boron or aluminum in a formal oxidation state of 3; and Q is a hydrocarbyl-,

hydrocarbyloxy-, fluorinated hydrocarbyl-, fluorinated hydrocarbyloxy-, or fluorinated silylhydrocarbyl- group of up to 20 non-hydrogen atoms, with the proviso that in not more than one occasion is Q hydrocarbyl. Most preferably, Q in each occurrence is a fluorinated aryl group, especially a pentafluorophenyl group. Preferred $(L^*-H)^+$ cations are N,N-dimethylanilinium, N,N-di(octadecyl)anilinium, di(octadecyl)methylammonium, methylbis(hydrogenated tallowyl)ammonium, and tributylammonium.

Illustrative, but not limiting, examples of boron compounds which may be used as an activating cocatalyst are tri-substituted ammonium salts such as: trimethylammonium tetrakis(pentafluorophenyl) borate; triethylammonium tetrakis(pentafluorophenyl) borate; tripropylammonium tetrakis (pentafluorophenyl) borate; tri(n-butyl)ammonium tetrakis (pentafluorophenyl) borate; tri(sec-butyl)ammonium tetrakis(pentafluorophenyl) borate; N,N-dimethylanilinium tetrakis (pentafluorophenyl) borate; N,N-dimethylanilinium n-butyltris(pentafluorophenyl) borate; N,N-dimethylanilinium benzyltris(pentafluorophenyl) borate; N,N-dimethylanilinium tetrakis(4-(t-butyldimethylsilyl)-2, 3, 5, 6-tetrafluorophenyl) borate; N,N-dimethylanilinium tetrakis(4-(triisopropylsilyl)-2, 3, 5, 6-tetrafluorophenyl) borate; N,N-dimethylanilinium pentafluoro phenoxytris(pentafluorophenyl) borate; N,N-diethylanilinium tetrakis(pentafluorophenyl) borate; N,N-dimethyl-2,4,6-trimethylanilinium tetrakis(pentafluorophenyl) borate; trimethylammonium tetrakis(2,3,4,6-tetrafluorophenyl)borate; triethylammonium tetrakis(2,3,4,6-tetrafluorophenyl) borate; tripropylammonium tetrakis(2,3,4,6-tetrafluorophenyl) borate; tri(n-butyl)ammonium tetrakis(2,3,4,6-tetrafluorophenyl) borate, dimethyl(t-butyl)ammonium tetrakis(2,3,4,6-tetra fluorophenyl) borate; N,N-dimethylanilinium tetrakis(2,3,4,6-tetrafluorophenyl) borate; N,N-diethylanilinium tetrakis (2,3,4,6-tetrafluorophenyl) borate; and N,N-dimethyl-2,4,6-trimethylanilinium tetrakis(2,3,4,6-tetrafluorophenyl) borate; dialkyl ammonium salts such as: di-(i-propyl)ammonium tetrakis(pentafluorophenyl) borate, and dicyclohexylammonium tetrakis (pentafluorophenyl) borate; tri-substituted phosphonium salts such as: triphenylphosphonium tetrakis (pentafluorophenyl) borate, tri(o-tolyl)phosphonium tetrakis(pentafluorophenyl) borate, and tri(2,6-dimethylphenyl)phosphonium tetrakis (pentafluorophenyl) borate; di-substituted oxonium salts such as: diphenyloxonium tetrakis(pentafluorophenyl) borate, di(o-tolyl)oxonium tetrakis (pentafluorophenyl) borate, and di(2,6-dimethylphenyl)oxonium tetrakis(pentafluorophenyl) borate; di-substituted sulfonium salts such as: diphenylsulfonium tetrakis(pentafluorophenyl) borate, di(o-tolyl)sulfonium tetrakis(pentafluorophenyl) borate, and bis(2,6-dimethylphenyl) sulfonium tetrakis(pentafluorophenyl) borate.

Preferred silylium salt activating cocatalysts include, but are not limited to, trimethylsilylium tetrakispentafluorophenylborate, triethylsilylium tetrakispentafluorophenylborate and ether substituted adducts thereof. Silylium salts have been previously generically disclosed in J. Chem. Soc. Chem. Comm., 1993, 383-384, as well as Lambert, J. B., et al., Organometallics, 1994, 13, 2430-2443. The use of the above silylium salts as activating cocatalysts for addition polymerization catalysts is disclosed in U.S. Patent No. 5,625,087. Certain complexes of alcohols, mercaptans, silanols, and oximes with tris(pentafluorophenyl)borane are also effective catalyst activators and may be used in embodiments of the invention. Such cocatalysts are disclosed in U.S. Patent No. 5,296,433.

The catalyst system may be prepared as a homogeneous catalyst by addition of the requisite components to a solvent in which polymerization will be carried out by solution polymerization procedures. The catalyst system may also be prepared and employed as a heterogeneous catalyst by adsorbing the requisite components on a catalyst support material such as silica gel, alumina or other suitable inorganic support material. When prepared in heterogeneous or supported form, it is preferred to use silica as the support material.

At all times, the individual ingredients, as well as the catalyst components, should be protected from oxygen and moisture. Therefore, the catalyst components and catalysts should be prepared and recovered in an oxygen and moisture free atmosphere. Preferably, therefore, the reactions are performed in the presence of a dry, inert gas such as, for example, nitrogen or argon.

The molar ratio of metal complex: activating cocatalyst employed preferably ranges from 1 : 1000 to 2 : 1, more preferably from 1 : 5 to 1.5 : 1, most preferably from 1 : 2 to 1 : 1. In the preferred case in which a metal complex is activated by trispentafluorophenylborane and triisobutylaluminum modified methylalumoxane, the titanium:boron:aluminum molar ratio is typically from 1 : 10 : 50 to 1 : 0.5 : 0.1, most typically from about 1 : 3 : 5.

In general, the polymerization may be accomplished at conditions for Ziegler-Natta or Kaminsky-Sinn type polymerization reactions, that is, reactor pressures ranging from atmospheric to 3500 atmospheres (34.5 kPa). The reactor temperature should be greater than 80°C, typically from 100°C to 250°C, and preferably from 100°C to 150°C, with higher reactor temperatures, that is, reactor temperatures greater than 100°C generally favoring the formation of lower molecular weight polymers.

Generally the polymerization process is carried out with a differential pressure of ethylene of from 70 to 7000 kPa (10 to 1000 psi), most preferably from 300 to 400 kPa (40 to 60 psi.). The polymerization is generally conducted at a temperature of from 80 to 250°C, preferably from 90 to 170 °C, and most preferably from greater than 95 to 160 °C.

In most polymerization reactions the molar ratio of catalyst:polymerizable compounds employed is from $10^{-12}$:1 to $10^{-1}$:1, more preferably from $10^{-9}$:1 to $10^{-5}$:1.

Solution polymerization conditions utilize a solvent for the respective components of the reaction. Preferred solvents include mineral oils and the various hydrocarbons which are liquid at reaction temperatures. Illustrative examples of useful solvents include alkanes such as pentane, isopentane, hexane, heptane, octane and nonane, as well as

mixtures of alkanes including kerosene and Isopar E™, available from Exxon Chemicals Inc.; cycloalkanes such as cyclopentane and cyclohexane; and aromatics such as benzene, toluene, xylenes, ethylbenzene and diethylbenzene.

The solvent will be present in an amount sufficient to prevent phase separation in the reactor. As the solvent functions to absorb heat, less solvent leads to a less adiabatic reactor. The solvent:ethylene ratio (weight basis) will typically be from 2.5 : 1 to 12 : 1, beyond which point catalyst efficiency suffers. The most typical solvent:ethylene ratio (weight basis) is in the range of from 5 : 1 to 10 : 1.

The polymerization may be carried out as a batchwise or a continuous polymerization process, with continuous polymerizations processes being required for the preparation of substantially linear polymers. In a continuous process, ethylene, comonomer, and optionally solvent and diene are continuously supplied to the reaction zone and polymer product continuously removed therefrom.

b) Tackifier Component

Addition of tackifier is desirable to allow for bonding prior to solidifying or setting of the adhesive. An example of this is in high-speed cereal box sealing operations where the overlapping flaps of the box need to adhere to one another while the hot melt adhesive solidifies.

Tackifying resins useful in the present invention include aliphatic, cycloaliphatic and aromatic hydrocarbons and modified hydrocarbons and hydrogenated versions; terpenes and modified terpenes and hydrogenated versions; and rosins and rosin derivatives and hydrogenated versions; and mixtures thereof. These tackifying resins have a ring and ball softening point from 70°C. to 150°C, and will typically have a viscosity at 177°C (350°F), as measured using a Brookfield viscometer, of no more than 20 grams/(cm.second) (2000 centipoise). They are also available with differing levels of hydrogenation, or saturation, which is another commonly used term. Useful examples include Eastotac™ H-100, H-115 and H-130 from Eastman Chemical Co. in Kingsport, Tenn., which are partially hydrogenated cycloaliphatic petroleum hydrocarbon resins with softening points of 100°C, 115°C and 130°C., respectively. These are available in the E grade, the R grade, the L grade and the W grade, indicating differing levels of hydrogenation with E being the least hydrogenated and W being the most hydrogenated. The E grade has a bromine number of 15, the R grade a bromine number of 5, the L grade a bromine number of 3 and the W grade has a bromine number of 1. Eastotac™H-142R from Eastman Chemical Co. has a softening point of about 140°C. Other useful tackifying resins include Escorez™5300, 5400 and 5637, partially hydrogenated cycloaliphatic petroleum hydrocarbon resins, and Escorez™5600, a partially hydrogenated aromatic modified petroleum hydrocarbon resin all available from Exxon Chemical Co. in Houston, Tex.; Wingtack™ Extra, which is an aliphatic, aromatic petroleum hydrocarbon resin available from Goodyear Chemical Co. in Akron, Ohio; Hercolite™ 2100, a partially hydrogenated cycloaliphatic petroleum hydrocarbon resin available from Hercules, Inc. in Wilmington, Del.

There are numerous types of rosins and modified rosins available with differing levels of hydrogenation including gum rosins, wood rosins, tall-oil rosins, distilled rosins, dimerized rosins and polymerized rosins. Some specific modified rosins include glycerol and pentaerythritol esters of wood rosins and tall-oil rosins. Commercially available grades include, but are not limited to, Sylvatac™ 1103, a pentaerythritol rosin ester available from Arizona Chemical Co., Unitac™ R-100 Lite, a pentaerythritol rosin ester from Union Camp in Wayne, N.J., Permalyn™ 305, an erythritol modified wood rosin available from Hercules and Foral 105 which is a highly hydrogenated pentaerythritol rosin ester also available from Hercules. Sylvatac ™R-85 and 295 are 85°C and 95°C melt point rosin acids available from Arizona Chemical Co. and Foral AX is a 70°C melt point hydrogenated rosin acid available from Hercules, Inc. Nirez V-2040 is a phenolic modified terpene resin available from Arizona Chemical Co.

Another exemplary tackifier, Piccotac 115, has a viscosity at 350°F (177°C) of about 1600 centipoise (16 grams/(cm.second)). Other typical tackifiers have viscosities at 177°C (350°F) of much less than 16 grams/(cm.second) (1600 centipoise), for instance, from 0.5 to 3 grams/(cm.second) (50 to 300 centipoise).

Exemplary aliphatic resins include those available under the trade designations Escorez™, Piccotac™, Mercures™, Wingtack™, Hi-Rez™, Quintone™, Tackirol™, etc. Exemplary polyterpene resins include those available under the trade designations Nirez™, Piccolyte™, Wingtack™, Zonarez™, etc. Exemplary hydrogenated resins include those available under the trade designations Escorez™, Arkon™, Clearon™, etc. Exemplary mixed aliphatic-aromatic resins include those available under the trade designations Escorez™, Regalite™, Hercures™, AR™, Imprez™, Norsolene™ M, Marukarez™, Arkon™ M, Quintone™, etc. These tackifiers may be employed with the polymers of the present invention, providing they are used at compatible levels. Other tackifiers may be employed, provided they are compatible with the homogeneous linear or substantially linear ethylene/alpha.-olefin interpolymer.

In certain applications of the present invention it is anticipated the hot melt adhesive will be prepared without the use of a tackifier or with a minimal quantity of tackifier. As tackifiers are malodorous, tend to cause corrosion of mechanical equipment, and cannot be easily separated from recycled paper pulp, hot melt adhesives which minimize the use of tackifiers are advantageous. Moreover, as tackifiers generally undergo degradation at elevated temperatures, hot melt adhesives which minimize the use of tackifiers will exhibit improved thermal stability.

Tackifiers added to hot-melt adhesives can be characterized by parameters such as their softening points, specific gravities, or by acid number. A tackifier can be selected from among the variety of tackifiers, as described above but not limited thereto, and from tackifiers characterized by a range of acid numbers, such as acid numbers between 0 and 100, more preferably between 0 and 25.8, and most preferably a tackifier having an acid number between 3-10.

c) Other Additives

Adhesives, including those of the present invention may also contain a number of additional components, such as a stabilizer, plasticizer, filler or antioxidant. Among the applicable stabilizers or antioxidants which can be included in the adhesive composition of the present invention are high molecular weight hindered phenols and multifunctional phenols, such as sulfur-containing and phosphorous-containing phenols. Hindered phenols, known to those skilled in the art, may be described as phenolic compounds, which also contain sterically bulky radicals in close proximity to the phenolic hydroxyl group. Specifically, tertiary butyl groups generally are substituted onto the benzene ring in at least one of the ortho positions relative to the phenolic hydroxyl group. The presence of these sterically bulky substituted radicals in the vicinity of the hydroxyl group serves to retard its stretching frequency, and correspondingly, its reactivity. It is this hindrance that provides the stabilizing properties of these phenolic compounds.

Representative hindered phenols include; but are not limited to: 2,4,6-trialkylated monohydroxy phenols; 1,3,5-trimethyl-2,4,6-tris-(3,5-di-tert-butyl-4-hydroxybenzyl)-benzene; pentaerythritol tetrakis-3(3,5-di-tert-butyl-4-hydroxyphenyl)-propionate, commercially available under the trademark IRGANOX® 1010; n-octadecyl-3(3,5-di-tert-butyl-4-hydroxyphenyl)-propionate; 4,4'-methylenebis (4-methyl-6-tert-butylphenol); 4,4'-thiobis (6-tert-butyl-o-cresol); 2,6-di-tertbutylphenol; 6-(4-hydroxyphenoxy)-2,4-bis(n-octyl-thio)-1,3,5 triazine; 2-(n-octylthio)ethyl 3,5-di-tert-butyl-4-hydroxy-benzoate; di-n-octadecyl 3,5-di-tert-butyl-4-hydroxy-benzylphosphonate; and sorbitol hexa(3,3,5-di-tert-butyl-4-hydroxy-phenyl)-propionate.

Antioxidants include, but are not limited to, butylated hydroxy anisole ("BHA") or butylated hydroxy toluene ("BHT") which may also be utilized to render the formulation more thermally stable. These stabilizers and antioxidants are added in amounts ranging from approximately 0.01 % to approximately 5% by weight of the formulation

Utilizing known synergists in conjunction with the antioxidants may further enhance the performance of these antioxidants. Some of these known synergists are, for example, thiodipropionate esters and phosphates. Chelating agents and metal deactivators, may also be used. Examples of these compounds include ethylenediaminetetraacetic acid ("EDTA"), and more preferably, its salts, and disalicylalpropylenediamine. Distearylthiodipropionate is particularly useful. When added to the adhesive composition, these stabilizers, if used, are generally present in amounts of about 0.1 to about 1.5 weight percent, and more preferably in the range of about 0.25 to about 1.0 weight percent.

The present invention also contemplates the addition of a polymeric additive to the adhesive. The polymeric additive can be selected from the group consisting of ethylene methyl acrylate polymers containing 10 to 28 weight percent by weight methyl acrylate; ethylene acrylic acid copolymers having an acid number of 25 to 150; polyethylene; polypropylene; poly(butene-1-co-ethylene) polymers and low molecular weight and/or low melt index ethylene n-butyl acrylate copolymers. When such a polymeric additive is added, it is present in amounts up to about 15 weight percent by weight of composition.

Depending on the contemplated end uses of the adhesive composition, other additives such as plasticizers, pigments and dyestuffs that are conventionally added to hot-melt adhesives may be included. In addition, small amounts of additional (secondary) tackifiers and/or waxes such as microcrystalline waxes, hydrogenated castor oil, styrene-ethylene butyl styrene (SEBS) resins and vinyl acetate modified synthetic waxes may also be incorporated in minor amounts, i.e., up to about 10 weight percent by weight, into the formulations of the present invention. A plasticizer may be used in lieu of, or in combination with, the secondary tackifier to modify viscosity and improve the tack properties of the adhesive composition.

A dispersant can also be added to these compositions. The dispersant can be a chemical, which may, by itself, cause the composition to be dispersed from the surface to which it has been applied, for example, under aqueous conditions. The dispersant may also be an agent which when chemically modified, causes the composition to be dispersed from the surface to which it has been applied. As known to those skilled in the art, examples of these dispersants include surfactants, emulsifying agents, and various cationic, anionic or nonionic dispersants. Compounds such as amines, amides and their derivatives are examples of cationic dispersants. Soaps, acids, esters and alcohols are among the known anionic dispersants. The addition of a dispersant may affect the recyclability of products to which a hot-melt adhesive may have been applied.

The surfactants can be chosen from a variety of known surface-active agents. These can include nonionic compounds such as ethoxylates available from commercial suppliers. Examples include alcohol ethoxylates, alkylamine ethoxylates, alkylphenol ethoxylates, octylphenol ethoxylates and the like. Other surfactants, such as a number of fatty acid esters may be employed; for example, but not limited to, glycerol esters, polyethyleneglycol esters and sorbitan esters.

Although the present invention has been described with a certain degree of particularity, it is to be understood that the examples below are merely for purposes of illustrating the present invention, the scope of the present invention is intended to be defined by the claims.

Composition and Properties of the Hot Melt Adhesive of the Present Invention

The hot melt adhesive of the present invention consists essentially of from about 60 to about 85 weight percent, preferably from about 65 to about 80 weight percent (based nn the final weight of the hot melt adhesive) of an homogeneous ethylene alpha olefin interpolymer, and of from about 15 to about 40 weight percent, more preferably from about 20 to about 35 weight percent (based on the final weight of the hot melt adhesive) of one or more tackifiers.

The homogeneous ethylene alpha olefin interpolymer component of the hot melt adhesives of the present invention has a density of from about 0.880 to about 0.930 g/cm$^3$, preferably from about 0.890 to about 0.920 g/cm$^3$, more preferably from about 0.8945 to about 0.915 g/cm$^3$, even more preferably greater than 0.885 g/cm$^3$, and most preferably greater than 0.895 g/cm$^3$.

The homogeneous ethylene alpha olefin interpolymer component of the hot melt adhesives of the present invention has a number average molecular weight (Mn as measured by GPC) of from about 1,000 to about 7,000, more preferably from about 1,500 to about 6000.

The homogeneous ethylene alpha olefin interpolymer component of the hot melt adhesives of the present invention has a Brookfield Viscosity (measured at 149°C) (300°F) of from about 5 to about 70 grams/(cm.second) (about 500 to about 7,000 cP), preferably from about 10 to about 70 grams/(cm.second) (about 1,000 to about 6,000 cP), more preferably from about 15 to about 50 grams/(cm.second) (about 1,500 to about 5000 cP).

The hot melt adhesives of the present invention have a Brookfield Viscosity (measured at 177°C) (350°F) of from about 4 to about 20 grams/(cm.second) (about 400 to about 2,000 cP), preferably from about 5 to about 14 grams/(cm.second) (about 500 to about 1,400 cP), more preferably from about 7.5 to about 12 grams/(cm.second) (about 750 to about 1,200 cP).

The hot melt adhesives of the present invention have a Peel Adhesion Failure Temperature (PAFT) of greater than or equal to 43°C (110°F), preferably greater than or equal to 46°C (115°F), more preferably greater than or equal to 49°C (120°F).

The hot melt adhesives of the present invention have a Shear Adhesion Failure Temperature (SAFT) of greater than or equal to 60°C (140°F), greater than or equal to 66°C (150°F), more preferably greater than or equal to 77°C (170°F).

The hot melt adhesives of the present invention exhibit 100% fiber tear between 25°C - 60°C (77°F - 140°F), preferably 100% fiber tear at 2°C-60°C (35°F-140°F), most preferably 100% fiber tear at 60°C (140°F).

PREPARATION OF EXAMPLES

Unless otherwise stated, the following examples reference to viscosity was determined in accordance with the following procedure using a Brookfield Laboratories DVII+ Viscometer in disposable aluminum sample chambers. The spindle used is a SC-31 hot-melt spindle, suitable for measuring viscosities in the range of from 0.1-1000 grams/(cm.second) (10 to 100,000 centipoise). A cutting blade is employed to cut samples into pieces small enough to fit into the 2.54 cm ( linch) wide, 12.7 cm (5 inches) long sample chamber. The sample is placed in the chamber, which is in turn inserted into a Brookfield Thermosel and locked into place with bent needle-nose pliers. The sample chamber has a notch on the bottom that fits the bottom of the Brookfield Thermosel to ensure that the chamber is not allowed to turn when the spindle is inserted and spinning. The sample is heated to the desired temperature, such as 149°C (300°F) or 177°C (350°F), with additional sample being added until the melted sample is about 2.54 cm (I inch) below the top of the sample chamber. The viscometer apparatus is lowered and the spindle submerged into the sample chamber. Lowering is continued until brackets on the viscometer align on the Thermosel. The viscometer is turned on, and set to a shear rate which leads to a torque reading in the range of 30 to 60 percent. Readings are taken every minute for about 15 minutes, or until the values stabilize, which final reading is recorded.

Unless otherwise stated, the Shear Adhesion Failure Temperature ("SAFT") test, (a test commonly used to evaluate adhesive performance, and well known to those versed in the industry) were conducted using a standard SAFT test method (ASTM D-4498). SAFT tests were run using a ChemInstruments HT-8 Oven Shear Tester using a 500 gm weight. The tests were started at room temperature (25°C / 77°F) and the temperature increased at the rate of 0.5 degrees C/min. The results were converted and reported in degrees F. The SAFT test measures the temperature at which an adhesive fails.

Unless otherwise stated, Peel Adhesion Failure Temperature ("PAFT") was conducted according to ASTM D-D4498 (modified for peel mode) using 100 gram weights. PAFT gives a measure of the adherence, when peeled at 180° angle, to a standard steel panel or to other surface of interest for a single-coated tape.

Unless otherwise stated % fiber tear on corrugated paper was conducted according to standard industry test

methods where a drop of adhesive heated to 177°C (350°F) is applied on the paper. After 1.5 seconds another paper of a given size (27.9 x 7.62 cm) (11 inches x 3 inches) is placed on the adhesive drop and laminated to the base paper. The two sheets are manually pulled apart rapidly and the % fiber tear (FT) estimated.

Unless otherwise stated, melting points of the adhesive formulations of the present invention used Differential Scanning Calorimetry ("DSC"). A few milligram of sample are placed into the instrument and the temperature was increased from room temperature to 180°C at 10°C per minute. The sample was then held isothermally at 180°C for 3 minutes, and then the temperature was ramped down at 10°C per minute to minus 40°C. The sample was held isothermally at -40°C for 3 minutes. The temperature was then ramped up at 10°C per minute to 150°C. Crystallinity and melting point data were reported from the second heat curve.

Density of the samples is determined in accordance with ASTM D 792.

The drop point of the samples is determined in accordance with ASTM 3954 (Mettler Drop Point).

Unless otherwise stated the evaluation of the adhesive properties of the inventive formulations was conducted by coating onto 45# basis weight kraft paper typically used in the manufacture of cardboard boxes and purchased from National Papers, Minneapolis, Minn.

Table 1 - Commercially Available Materials Used in Evaluations

| Ingredient | Supplier |
|---|---|
| Escorez 5400 | ExxonMobil Chemical Company Houston, TX - Cyclical hydrogenated hydrocarbon tackifier resin with softening point of 103° C. |
| Escorez 5637 | ExxonMobil Chemical Company Houston, TX - aromatic modified cycloaliphatic hydrocarbon tackifier resin with softening point of 127-133°C. |
| Eastotack H 1300W | Eastman Chemical Company Kingsport, TN. ring and ball softening point of 130°C and a Gardner color (molten state) of <1, *Eastotac* hydrocarbon resins are hydrogenated $C_5$ aliphatic hydrocarbon tackifying resins. |
| Advantra® HL-9250 | H.B. Fuller Company St. Paul, MN - formulated adhesive for carton and uncoated corrugated stocks with a viscosity at 163°C (325°F) of 12.5 grams/(cm.second) (1,255cps) and specific gravity of 0.929 g/cm$^3$. |
| Advantra® HL-9255 | H.B. Fuller Company St. Paul, MN - formulated adhesive for wrapper and coated carton stocks with a viscosity at 163°C (325°F) of 11.4 grams/(cm.second) (1,140cps) and specific gravity of 0.943 g/cm$^3$. |
| BAM Futura 1 | IDC - A Division of Ambersil, England - hot melt adhesive for books, magazines, catalogues and directories. |
| HL-7268 | H.B. Fuller Company St. Paul, MN. |
| HL-2835 grams/(cm.second) | H.B. Fuller Company St. Paul, MN -formulated adhesive with moderate speed of set, good flexibility, for bonding a variety of substrates, with a viscosity at 149°C (300°F) of 22 (2,200cP.). |
| Henkel 80-8488 | Henkel Consumer Adhesives Inc. Avon, OH - formulated adhesive for bonding a variety of substrates, with a viscosity at 177°C (350°F) of 1,080cP (10.8 grams/(cm.second) (1080 cP). |
| Henkel 80-8368 | Henkel Consumer Adhesives Inc. Avon, OH - formulated adhesive for bonding a variety of substrates, with a viscosity at 177°C (350°F) of 9.7 grams/(cm.second) (970cP.). |
| ULTRATHENE® 612-04 | EVA resin with 18% VA content, made by Equistar Chemical, LP. |
| FORAL® 85 | Rosin Ester tackifier, made by Hercules. |
| Wax, 1251/7 | Microcrystalline Control supplied by Frank B. Ross Co. |
| EVA-1 | A formulation of 33 wt% ULTRATHENE® 612-04 (18% vinyl acetate co-monomer); 33% FORAL® 85 33% Wax, 1251/7. |

Example 1. Ethylene/alpha-Olefin Polymer Preparation Using Single Metallocene Catalyst System

A series of ethylene/α-olefin interpolymers were also prepared in a 3.8 liter (1 gallon), oil jacketed, Autoclave continuously stirred tank reactor ("CSTR"). A magnetically coupled agitator with Lightning A-320 impellers provided the mixing. The reactor ran liquid full at 3,275 kPa (475 psig). Process flow was in at the bottom and out of the top. A heat transfer oil was circulated through the jacket of the reactor to remove some of the heat of reaction. At the exit of the reactor was a Micro-Motion™ flow meter that measured flow and solution density. All lines on the exit of the reactor were traced with 344.7 kPa (50 psi) steam and insulated.

ISOPAR-E solvent and comonomer were supplied to the reactor at 206.8 kPa (30 psig) pressure. The solvent feed to the reactors was measured by a Micro-Motion™ mass flow meter. A variable speed diaphragm pump controlled the solvent flow rate and increased the solvent pressure to reactor pressure. The comonomer was metered by a Micro-Motion™ mass flow meter and flow controlled by a Research control valve. The comonomer stream was mixed with the solvent stream at the suction of the solvent pump and was pumped to the reactor with the solvent. The remaining solvent was combined with ethylene and (optionally) hydrogen and delivered to the reactor. The ethylene stream was measured by a Micro-Motion™ mass flow meter just prior to the Research valve controlling flow. Three Brooks flow meter/controllers ( 1 - 200 sccm and 2 - 100sccm) were used to deliver hydrogen into the ethylene stream at the outlet of the ethylene control valve.

The ethylene or ethylene / hydrogen mixture combined with the solvent / comonomer stream at ambient temperature. The temperature of the solvent/monomer as it enters the reactor was controlled with two heat exchangers. This stream enters the bottom of the 3.8 liter (I gallon) CSTR. The three component catalyst system and its solvent flush also enter the reactor at the bottom but through a different port than the monomer stream.

Polymerization was stopped with the addition of catalyst kill into the reactor product line after the meter measuring the solution density. Other polymer additives could be added with the catalyst kill. The reactor effluent stream then entered a post reactor heater that provides additional energy for the solvent removal flash. This flash occurs as the effluent exits the post reactor heater and the pressure is dropped from 3,275 kPa (475 psig) down to 68.94 kPa (10 psig) at the reactor pressure control valve.

This flashed polymer entered a hot oil jacketed devolatilizer. Approximately 90 % of the volatiles were removed from the polymer in the devolatilizer. The volatiles exit the top of the devolatilizer. The remaining stream is condensed with a chilled water jacketed exchanger and then enters a glycol jacket solvent / ethylene separation vessel. Solvent is removed from the bottom of the vessel and ethylene vents from the top. The ethylene stream is measured with a Micro-Motion™ mass flow meter. This measurement of unreacted ethylene was used to calculate the ethylene conversion. The polymer separated in the devolatilizer and was pumped out with a gear pump. The product is collected in lined pans and dried in a vacuum oven at 140°C for 24 hr. Table 2 summarizes the polymerization conditions and Table 3 the properties of the resulting polymers.

Table 2 - Ethylene/α-Olefin Interpolymer Preparation Conditions*

| Polyme # | Reactor Temp °C | Solvent Flow lb/lu | Ethylene Flow lb/hr | Octene Flow Ib/hr | Propylene Flow lb/hr | Hydrogen Flow sccm | C2 Conversion (%) | B/Ti Molar Ratio | MAO/T Molar Ratio |
|---|---|---|---|---|---|---|---|---|---|
| 1 | 150 | 25.4 | 2.65 | 1.37 | - | 143.8 | 90.10 | 1.16 | 4.99 |
| 2 | 150 | 25.2 | 2.65 | 1.20 | - | 139.9 | 90.00 | 1.23 | 5.03 |
| 3 | 150 | 25.6 | 2.65 | 1.15 | - | 149.9 | 90.40 | 1.21 | 4.93 |
| 4 | 151 | 25.0 | 2.65 | 1.90 | - | 167.3 | 90.22 | 1.24 | 5.00 |
| 5 | 150 | 25.2 | 2.65 | 1.72 | - | 197.0 | 89.75 | 1.21 | 4.93 |
| 6 | 151 | 25.1 | 2.65 | 1.85 | - | 144.2 | 90.47 | 1.25 | 4.97 |
| 7 | 150 | 25.2 | 2.65 | 1.67 | - | 175.4 | 90.36 | 1.20 | 4.95 |
| 8 | 148 | 25.5 | 2.65 | 1.00 | - | 126.6 | 89.95 | 1.15 | 4.99 |
| 9 | 151 | 25.2 | 2.65 | 1.30 | - | 111.5 | 90.09 | 1.14 | 4.97 |
| 10 | 150 | 25.1 | 2.65 | 1.24 | - | 108.2 | 90.42 | 1.20 | 9.92 |
| 11 | 148 | 25.1 | 2.65 | 1.35 | - | 107.9 | 90.05 | 1.21 | 4.99 |
| 12 | 148 | 25.3 | 2.65 | 1.15 | - | 113.9 | 90.00 | 1.19 | 5.01 |
| 13 | 147 | 25.1 | 2.65 | 1.31 | - | 106.9 | 90.09 | 1.24 | 5.04 |
| 14 | 147 | 25.5 | 2.65 | 1.00 | - | 114.9 | 90.02 | 1.15 | 4.98 |
| 15 | 151 | 25.2 | 2.65 | 1.30 | - | 83.7 | 89.88 | 1.13 | 4.93 |
| 16 | 150.5 | 25.2 | 2.65 | - | 0.60 | 159.9 | 90.2 | 1.22 | 5.01 |
| 17 | 150.1 | 25.2 | 2.65 | - | 0.75 | 164.8 | 89.9 | 1.20 | 4.94 |
| 18 | 150.2 | 25.2 | 2.65 | - | 0.45 | 165.5 | 90.0 | 1.18 | 4.91 |
| 19 | 150.1 | 25.2 | 2.65 | - | 0.90 | 166.0 | 89.8 | 1.20 | 5.02 |
| 20 | 150.4 | 25.2 | 2.65 | - | 0.70 | 124.9 | 90.3 | 1.26 | 5.04 |
| 21 | 150.4 | 25.2 | 2.65 | - | 0.52 | 126.9 | 89.9 | 1.21 | 5.05 |
| 22 | 149.9 | 25.2 | 2.62 | - | 0.70 | 94.9 | 90.0 | 1.22 | 4.72 |

(continued)

| Polyme # | Reactor Temp °C | Solvent Flow lb/lu | Ethylene Flow lb/hr | Octene Flow Ib/hr | Propylene Flow lb/hr | Hydrogen Flow sccm | C2 Conversion (%) | B/Ti Molar Ratio | MAO/T Molar Ratio |
|---|---|---|---|---|---|---|---|---|---|
| 23 | 150.7 | 25.2 | 2.65 | - | 0.52 | 96.2 | 90.5 | 1.20 | 5.02 |

* The catalyst for all polymerizations was ($C_5Me_4SiMe_2N^tBu$)Ti($\eta^4$-1,3-pentadiene) prepared according to Example 17 of US Patent 5,556,928. The primary cocatalyst for all polymerisations was Armeenium Borate [methylbis(hydrogenatedtallowalkyl) ammonium tetrakis (pentafluoro phenyl) borate prepared as in U.S. Patent # 5,919,983, Ex. 2,. The secondary cocatalyst for all polymerizations was a modified methylaluminoxane (MMAO) available from Akzo Nobel as MMAO-3A (CAS# 146905-79-10).

Table 3 - Properties of Ethylene/α-Olefin Interpolymers

| Polyme # | Viscosity @ 149°C/ Density (300 °F) (grams/ (cm.second) / (cP) | (g/cm$^3$) | $M_w$ | $M_n$ | $M_w/M_n$ | Wt% Com. | Mol% Com. | Drop Point (°C) | $T_m$ 1 (°C) | $T_m$ 2 (°C) | Heat of Fusion (J/g) | % Cryst | $T_c$ 1(°C) | $T_c$ 2(°C) |
|---|---|---|---|---|---|---|---|---|---|---|---|---|---|---|
| 1 | 13.75/ (1,375) | 0.9073 | 8,890 | 3,420 | 2.60 | 19.2 | 5.6 | 105.6 | 99.1 | 103.3 | 122 6 | 42 | 90.0 | 50.5 |
| 2 | 14.42/ (1,442) | 0.9125 | 9,000 | 3,480 | 2.59 | 20 | 5.9 | 108.9 | 102.1 | 107.0 | 142.4 | 49 | 92.4 | 54.1 |
| 3 | 14.90/ (1,490) | 0.9153 | 8,940 | 3,380 | 2.64 | 15.7 | 4.4 | 109.5 | 104.0 | 107.6 | 140.2 | 48 | 94.6 | 55.9 |
| 4 | 16.38/ (1,638) | 0.8953 | 9,310 | 3,650 | 2.55 | 28.3 | 9.0 | 99.3 | 93.3 | 83.2 | 99.1 | 34 | 82.5 | |
| 5 | 17.16/ (1,716) | 0.8991 | 9,280 | 3,640 | 2.55 | 22.2 | 6.7 | 102.4 | 95.8 | | 113.6 | 39 | 85.8 | |
| 6 | 22.29/ (2,229) | 0.8958 | 10,100 | 4,080 | 2.48 | 27.8 | 8.8 | 100.0 | 93.3 | 83.3 | 99.7 | 34 | 82.8 | |
| 7 | 22.53/ (2,253) | 0.9014 | 9,970 | 4,070 | 2.45 | 21.9 | 6.5 | 103.6 | 96.5 | | 111.9 | 38 | 86.1 | |
| 8 | 29.59/ (2,959) | 0.9146 | 10.800 | 4,860 | 2.22 | 16.4 | 4.7 | 110.5 | 103.3 | 106.9 | 134.9 | 46 | 93.1 | 53.9 |
| 9 | 30.54/ (3,054) | 0.9085 | 10,700 | 4,080 | 2.62 | 19.1 | 5.6 | 107.4 | 101.1 | | 126.4 | 43 | 91.4 | 51.1 |
| 10 | 30.29/ (3,029) | 0.9092 | 10,800 | 4,310 | 2.51 | 18.2 | 5.3 | 107.1 | 99.7 | | 122.3 | 42 | 89.1 | 48.9 |
| 11 | 31.39/ (3,139) | 0.9035 | 11,000 | 4,850 | 2.27 | 20.6 | 6.1 | 104.5 | 97.4 | | 112.1 | 38 | 86.9 | |
| 12 | 33.43/ (3,545) | 0.9088 | 11,600 | 5,370 | 2.16 | 18.7 | 5.4 | 107.4 | 100.3 | | 123.8 | 42 | 88.9 | 47.9 |

(continued)

| Polyme # | Viscosity @ 149°C/ Density (300 °F) (grams/ (cm.second) / (cP) | (g/cm$^3$) | $M_w$ | $M_n$ | $M_w/M_n$ | Wt% Com. | Mol% Com. | Drop Point (°C) | $T_m$ 1 (°C) | $T_m$ 2 (°C) | Heat of Fusion (J/g) | % Cryst | $T_c$ 1(°C) | $T_c$ 2(°C) |
|---|---|---|---|---|---|---|---|---|---|---|---|---|---|---|
| 13 | 38.02/ (3,802) | 0.9039 | 11,700 | 5,150 | 2.27 | 20.5 | 6.1 | 105.1 | 97.4 | | 114.3 | 39 | 85.9 | |
| 14 | 41.09/ (4,109) | 0.9143 | 11,800 | 5,300 | 2.23 | 16.8 | 4.8 | 110.7 | 103 5 | | 135.3 | 46 | 93.3 | 53.2 |
| 15 | 58.00/ (5.899) | 0.9078 | 12,800 | 4,890 | 2.62 | 19.3 | 5.6 | 107.5 | 100.4 | | 123.8 | 42 | 90.2 | 48.5 |
| 16 | 14.58/ (1,458) | 0.9152 | 9,070 | 4,030 | 2.25 | 12.2 | 8.5 | 103.1 | 85.6 | 99.5 | 147.2 | 50 | 87.7 | 58.1 |
| 17 | 15.03/ (1,503) | 0.9088 | 9,010 | 3,920 | 2.30 | 14.9 | 10.5 | 99.2 | 79.7 | 95.0 | 128.4 | 44 | 82.9 | 53.1 |
| 18 | 15.45/ (1,545) | 0.9267 | 9,100 | 3,900 | 2.33 | 11.3. | 7.8 | 110.2 | 106.4 | | 163.9 | 56 | 95.5 | |
| 19 | 15.57/ (1,557) | 0.9003 | 9.060 | 3,970 | 2.28 | 18.9 | 13.4 | 94.6 | 74.9 | 90.2 | 112.4 | 38 | 77.9 | 68.6 |
| 20 | 28.84 (2,884) | 0.9172 | 10,700 | 4.550 | 2.35 | 11.3 | 7.8 | 105.5 | 101.2 | | 135.6 | 46 | 89.9 | 59.1 |
| 21 | 30.05/ (3,005) | 0.9187 | 10,800 | 4,690 | 2.30 | 11.1 | 7.7 | 106.0 | 102.1 | | 149.3 | 51 | 90.7 | 60.4 |
| 22 | 58.89/ (5,889) | 0.9161 | 12,900 | 5,460 | 2.36 | 11.8 | 8.2 | 96.7 | | | 143.1 | 49.0 | 91 | 59.2 |
| 23 | 60.16/ (6,019) | 0.9162 | 12,900 | 5,470 | 2.36 | 11.9 | 8.3 | 106.2 | 87.5 | 100.5 | 141.1 | 48 | 89.4 | 58.5 |

Example 2. Preparation of Adhesive Formulations with Tackifier.

Ingredients were blended in a metal container to a total weight of 100g. Tackifier resin was added into the container and allowed to heat for 10 minutes with a heating mantle for temperature control. The polymer was slowly added over 3-5 minutes. Once melted, the ingredients were mixed by hand using a metal spatula at a moderate rate of speed. After complete addition of the polymer, the adhesive was allowed to mix an additional 15 minutes to assure uniformity. The final adhesive temperature in all cases was 177°C-182°C (350°F-360°F). A single tackifier was used in some formulations, while other formulations used a combination of tackifiers.

Example 3. Evaluation of Adhesive Formulations

The adhesive formulations prepared according to Example 2 were evaluated for their adhesive properties using the testing methods previously described. The properties of these adhesive formulations are summarized in Tables 4 -6, and are compared with the properties of several commercially available adhesives (Table 7).

Most of the ethylene/alpha-olefin polymers synthesized using ethylene and 1-octene showed good performance when fiber tear was evaluated over the higher range of temperatures (between 25°C and 60°C) (between 77 degrees F and 140 degrees F) (Several of these formulations also were elective at 2 degrees C (35 degrees F).

Table 4 - Properties of Hot Melt Adhesives of the Present Invention (Ethylene/Octene Interpolymer)

| Ex # | Polymer Sample # | Polymer (wt%) | Escorez 5637 (wt%) | Fiber Tear (%) | | | | | PAFT (°C/ (°F) | SAFT (°C/ °F) | Viscosity @ 177°C (350 °F) grams/ (cm.second) /(cP) |
|---|---|---|---|---|---|---|---|---|---|---|---|
| | | | | minus 18°C (0 °F) | 2°C/ (35 °F) | 25°C/ (77 °F) | 49°C/(120 °F) | 60°C/(140 °F) | | | |
| 1 | 1 | 85.0 | 15.0 | 100 | 100 | 100 | 0 | 0 | 30 (86) | 94.5 (202) | 6.8 (680) |
| 2 | 1 | 72.5 | 27.5 | 0 | 0 | 100 | 100 | 100 | 48 (118) | 92.3 (198) | (5.1) (510) |
| 3 | 1 | 60.0 | 40.0 | 0 | 0 | 0 | 100 | 100 | 58 (136) | 88.4 (191) | 4.3 (430) |
| 4 | 3 | 85.0 | 15.0 | 0 | 0 | 0 | 0 | 0 | 42.2 (108) | 100 (212) | 6.2 (620) |
| 5 | 3 | 72.5 | 27.5 | 0 | 0 | 0 | 100 | 100 | 50 (122) | 97.3 (207) | 5.25 (525) |
| 6 | 3 | 60.0 | 40.0 | 0 | 0 | 0 | 100 | 100 | 61.2 (142) | 95.1 (203) | 4.65 (465) |
| 7 | 4 | 85.0 | 15.0 | 100 | 100 | 100 | 0 | 0 | 34 (93) | 84 (183) | 6.8 (680) |
| 8 | 4 | 72.5 | 27.5 | 0 | 100 | 100 | 100 | 100 | 37.8 (100) | 81 (178) | 5.4 (540) |
| 9 | 4 | 60.0 | 40.0 | 0 | 0 | 100 | 100 | 100 | 52.3 (126) | 79 (174) | 4.4 (440) |
| 10 | 6 | 85.0 | 15.0 | 100 | 100 | 100 | 0 | 0 | 30 (86) | 85.6 (186) | 9.1 (910) |
| 11 | 6 | 72.5 | 27.5 | 50 | 100 | 100 | 0 | 0 | 46 (115) | 83 (181) | 7.9 (790) |
| 12 | 6 | 60.0 | 40.0 | 0 | 0 | 100 | 100 | 100 | 53.4 (128) | 80 (176) | 5.85 (585) |
| 13 | 7 | 60.0 | 40.0 | 0 | 0 | 0 | 100 | 100 | 58 (135) | 85 (183) | 7.5 (750) |

(continued)

| Ex # | Polymer Sample # | Polymer (wt%) | Escorez 5637 (wt%) | Fiber Tear (%) minus 18°C (0 °F) | Fiber Tear (%) 2°C/ (35 °F) | Fiber Tear (%) 25°C/ (77 °F) | Fiber Tear (%) 49°C/(120 °F) | Fiber Tear (%) 60°C/(140 °F) | PAFT (°C/ (°F) | SAFT (°C/ °F) | Viscosity @ 177°C (350 °F) grams/ (cm.second) /(cP) |
|---|---|---|---|---|---|---|---|---|---|---|---|
| 14 | 8 | 78.0 | 22.0 | 0 | 0 | 100 | 100 | 100 | 47 (116) | | 11.2 (1,120) |
| 15 | 8 | 73.0 | 27.0 | 0 | 0 | 100 | 100 | 50 | 53 (127) | | 10.0 (1,000) |
| 16 | 8 | 68.0 | 32.0 | 0 | 0 | 100 | 100 | 0 | 60 (140) | | 9.3 (930) |
| 17 | 9 | 72.5 | 27.5 | 0 | 100 | 100 | 100 | 100 | 50 (122) | 94 (201) | 10.2 (1,020) |
| 18 | 10 | 78.0 | 22.0 | 0 | 0 | 100 | 100 | 100 | 43 (110) | 95.2 (205) | 11.15 (1.115) |
| 19 | 10 | 73.0 | 27.0 | 0 | 0 | 100 | 100 | 100 | 48.4 (119) | 95.1 (203) | 0.5 (1,050) |
| 20 | 10 | 68.0 | 32.0 | 0 | 0 | 100 | 100 | 100 | 53.4 (128) | 94 (201) | 9.5 (950) |
| 21 | 11 | 78.0 | 22.0 | 0 | 100 | 100 | 100 | 100 | 41.1 (106) | | 12.4 (1,240) |
| 22 | 11 | 73.0 | 27.0 | 0 | 100 | 100 | 100 | 100 | 51.1 (124) | | 10.9 (1,090) |
| 23 | 11 | 68.0 | 32.0 | 0 | 0 | 100 | 100 | 100 | 53 (127) | | 9.85 (985) |
| 24 | 12 | 78.0 | 22.0 | 0 | 50 | 100 | 100 | 100 | 44.5 (112) | | 129 (1,290) |
| 25 | 12 | 73.0 | 27.0 | 0 | 0 | 100 | 100 | 100 | 53.4 (125) | | 11.9 (1,190) |
| 26 | 12 | 68.0 | 32.0 | 0 | 0 | 100 | 100 | 100 | 54.5 (130) | | 11.5 (1,150) |

(continued)

| Ex # | Polymer Sample # | Polymer (wt%) | Escorez 5637 (wt%) | Fiber Tear (%) | | | | | PAFT (°C/ (°F) | SAFT (°C/ °F) | Viscosity @ 177°C (350 °F) grams/ (cm.second) /(cP) |
|---|---|---|---|---|---|---|---|---|---|---|---|
| | | | | minus 18°C (0 °F) | 2°C/ (35 °F) | 25°C/ (77 °F) | 49°C/(120 °F) | 60°C/(140 °F) | | | |
| 27 | 13 | 78.0 | 22.0 | 0 | 100 | 100 | 50 | 100 | 44 (111) | | 13.2 (1,320) |
| 28 | 13 | 73.0 | 27.0 | 0 | 100 | 100 | 100 | 100 | 48.4 (119) | | 13.1 (1.310) |
| 29 | 13 | 68.0 | 32.0 | 0 | 0 | 100 | 100 | 100 | 55 (131) | | 12.6 (1,260) |
| 30 | 14 | 78.0 | 22.0 | 0 | 0 | 100 | 100 | 50 | 50.6 (123) | | 13.8 (1,380) |
| 31 | 14 | 73.0 | 27.0 | 0 | 0 | 100 | 50 | 50 | 54 (129) | | 13.4 (1,340) |
| 32 | 14 | 68.0 | 32.0 | 0 | 0 | 100 | 50 | 50 | 58 (136) | | 12.3 (1,230) |
| 33 | 15 | 85.0 | 15.0 | 100 | 100 | 100 | 100 | 100 | 44.5 (112) | 96.7 (206) | 22.5 (2,250) |
| 34 | 15 | 72.5 | 27.5 | 0 | 100 | 100 | 100 | 100 | 52.3 (126) | 95.1 (203) | 18.2 (1,820) |
| 35 | 15 | 60.0 | 40.0 | 0 | 0 | 0 | 100 | 100 | 62.2 (142) | 93 (199) | 14.35 (1,435) |

Table 5 - Properties of Hot Melt Adhesives of the Present Invention

| (Ethylene/Propylene Interpolymer) | | | | | | | | | | |
|---|---|---|---|---|---|---|---|---|---|---|
| Ex # | Polymer Sample # (wt%) | Tackifier* (wt%) | FiberTear (%) | | | | | PAFT (°C/°F) | SAFT (°C/°F) | Viscosity @ 177°C (350 °F) grams/ (cm.second) / (cP) |
| | | | minus 18°C/ (0 °F) | 2°C/ (35 °F) | 25°C/ (77 °F) | 49°C/ (120 °F) | 60°C/ (140 °F) | | | |
| 36 | 16 | 15.0 | 0 | 0 | 0 | 0 | 0 | 33.4 (92) | 94 (201) | 7.45 (745) |
| 37 | 16 | 27.5 | 0 | 0 | 0 | 100 | 100 | 41.1 (106) | 93 (199) | 5.90 (590) |
| 38 | 18 | 15.0 | 0 | 0 | 0 | 0 | 0 | 42.2 (108) | 102 (215) | 8.00 (800) |
| 39 | 18 | 40.0 | 0 | 0 | 0 | 0 | 0 | 54.5 (138) | 97.3 (207) | 4.90 (490) |
| 40 | 19 | 15.0 | 0 | 100 | 100 | 0 | 0 | 34 (93) | 80 (176) | 6.95 (695) |
| 41 | 19 | 27.5 | 0 | 0 | 100 | 0 | 0 | 33.4 (92) | 77 (171) | 6.30 (630) |
| 42 | 19 | 40.0 | 0 | 0 | 0 | 100 | 100 | 50.6 (123) | 75.6 (168) | 4.85 (485) |
| 43 | 21 | 15.0 | 0 | 100 | 0 | 0 | 0 | 44 (111) | 96.7 (206) | 13.70 (1370) |
| 44 | 21 | 40.0 | 0 | 0 | 0 | 0 | 0 | 59.5 (139) | 92 (197) | 8.22 (822) |
| 45 | 22 | 15.0 | 0 | 100 | 0 | 0 | 0 | 42.2 (108) | 96.7 (206) | 24.90 (2490) |
| 46 | 22 | 27.5 | 0 | 0 | 0 | 0 | 100 | 53.4 (128) | 95.1 (203) | 19.75 (1975) |
| 47 | 22 | 40.0 | 0 | 0 | 0 | 0 | 0 | 62 (143) | 92.3 (198) | 14.90 (1490) |
| *In all examples the tackifier used was Escorez 5637 | | | | | | | | | | |

Table 6 - Properties of Hot Melt Adhesives of the Present Invention (mixed tackifiers)

| Ex # | Polymer Sample # (wt%) | Tackifier (wt%) | | FiberTear (%) | | | | | PAFT | SAFT | Viscosity (grams/ (cm.second)/(cP) | |
|---|---|---|---|---|---|---|---|---|---|---|---|---|
| | | E-5400[1] | E-5637[2] | minus 18 °C (0 °F) | 2°C (35 °F) | 25°C (77°F) | 49°C (120 °F) | 60°C (140 °F) | °C (°F) | °C (°F) | 149°C (300°*F) | 177°C (350°F) |
| 48 | 4 (70.0) | 22.3 | 7.5 | 10 | 100 | - | 20 | 0 | 36.7 (98) | 80.6 (177) | 10.90 (1090) | 5.50 (550) |
| 49 | 4 (63.0) | 17.5 | 17.5 | 0 | 80 | - | 80 | 80 | 48 (118) | 79 (174) | 12.00 (1200) | 5.20 (520) |
| 50 | 4 (75.0) | 12.5 | 12.5 | 20 | 100 | - | 10 | 0 | 37.8 (100) | 83 (181) | 11.80 (1180) | 6.10 (610) |
| 51 | 4 (75.0) | 0 | 25.0 | 50 | 100 | - | 100 | 50 | 40 (104) | 83.4 (182) | 12.50 (1250) | 6.40 (640) |
| 52 | 4 (65.0) | 0 | 35.0 | 0 | 0 | - | 100 | 75 | 45.6 (114) | 80.6 (177) | 11.00 (1100) | 5.45 (545) |
| 53 | 4 (67.5) | 7.5 | 25.0 | 0 | 80 | - | 100 | 100 | 44.5 (112) | 80.6 (177) | 12.10 (1210) | 5.80 (580) |
| 54 | 4 (70.0) | 30.0 | 0 | 10 | 100 | - | 60 | 10 | 35 (95) | 79.5 (175) | 10.50 (1050) | 5.35 (535) |
| 55 | 4 (65.0) | 0 | 35.0 | 0 | 0 | - | 100 | 10 | 48.4 (119) | 80 (176) | 10.50 (1050) | 5.50 (550) |
| 56 | 4 (75.0) | 25.0 | 0 | 50 | 100 | - | 50 | 10 | 34.5 (94) | 82 (179) | 11.45 (1145) | 5.95 (595) |
| 57 | 4 (65.0) | 35.0 | 0 | 0 | 100 | - | 100 | 50 | 37.8 (100) | 78.4 (173) | 9.92 (992) | 5.00 (500) |
| 58 | 4 (65.0) | 35.0 | 0 | 10 | 100 | - | 100 | 50 | 38 (101) | 79 (174) | 9.90 (990) | 4.90 (490) |
| 59 | 4 (75.0) | 0 | 25.0 | 0 | 100 | - | 100 | 50 | 40 (104) | 82 (179) | 12.60 (1260) | 6.50 (650) |
| 60 | 4 (70.0) | 0 | 30.0 | 0 | 80 | - | 100 | 50 | 45 (113) | 82.3 (180) | 11.85 (1185) | 6.00 (600) |

(continued)

| Ex # | Polymer Sample # (wt%) | Tackifier (wt%) | | FiberTear (%) | | | | | PAFT | SAFT | Viscosity (grams/(cm.second)/(cP) | |
|---|---|---|---|---|---|---|---|---|---|---|---|---|
| | | E-5400[1] | E-5637[2] | minus 18 °C (0 °F) | 2°C (35 °F) | 25°C (77°F) | 49°C (120 °F) | 60°C (140 °F) | °C (°F) | °C (°F) | 149°C (300°*F) | 177°C (350°F) |
| 61 | 6 (60.0) | 40.0 | 0 | 0 | 0 | - | 100 | 100 | 53 (127) | 80.6 (177) | 13.30 (1330) | 6.25 (625) |
| 62 | 6 (67.5) | 32.5 | 0 | 0 | 0 | - | 80 | 80 | 48.4 (119) | 82 (179) | 14.90 (1490) | 7.20 (720) |
| 63 | 6 (75.0) | 25.0 | 0 | 0 | 100 | - | 20 | 10 | 39 (102) | 85.6 (186) | 16.40 (1640) | 8.30 (830) |
| 64 | 6 (60.0) | 40.0 | 0 | 0 | 0 | - | 100 | 100 | 33.4 (125) | 81 (178) | 13.40 (1340) | 6.30 (630) |
| 65 | 6 (63.0) | 33.0 | 0 | 0 | 0 | - | 80 | 80 | 50 (122) | 81 (178) | 14.20 (1420) | 6.80 (680) |
| 66 | 6 (75.0) | 25.0 | 0 | 0 | 100 | - | 25 | 20 | 37.8 (100) | 87 (188) | 16.30 (1630) | 8.25 (825) |
| 67 | 6 (70.0) | 30.0 | 0 | 0 | 50 | - | 100 | 100 | 48 (118) | 83 (181) | 15.10 (1510) | 7.45 (745) |

Table 7 - Properties of Commercial Hot Melt Adhesives of Prior Art

| Comp Ex # | Name | Type | Viscosity @ 149°C (grams/ (cm.second) (300 °F (cP) | Viscosity @ 177°C (grams/ (cm.second) (350 °F (cP) | FiberTear | | | | | PAFT (°C) (°F) | SAFT (°C) (°F) |
|---|---|---|---|---|---|---|---|---|---|---|---|
| | | | | | minus 18°C (0 °F) | 2°C (35 °F) | 25°C (77 °F) | 49°C (120 °F) | 60°C (140 °F) | | |
| 1 | ADVANTRA HL-9250 | AFFINITY*-Based | 16.80 (1680) | 8.60 (860) | 1.0 | 1.0 | 1.0 | 1.0 | 1.0 | 61.2 (142) | 92.3 (198) |
| 2 | ADVANTRA HL-9256 | AFFINITY*-Based | 15.60 (1560) | 7.50 (750) | 0 | 1.0 | 1.0 | 1.0 | 1.0 | 66.2 (151) | 89 (192) |
| | BAM Futura 1 | | 14.40 (1440) | 6.50 (650) | 0 | 1.0 | | 1.0 | 1.0 | 58 (136) | 89 (192) |
| | EVA 1 | EVA-Based | 15.87 (1587) | | | | | 1.0 | | | 60 (150) |
| 3 | Fuller HL-7268 | EVA-Based | | 9.60 (960) | | | 1.0 | 1.0 | 1.0 | 66 (144) | 89 (192) |
| 4 | Fuller HL-2835 | EVA-Based | | 10.70 (1,070) | 1.0 | 1.0 | 1.0 | 1.0 | 1.0 | 52.3 (126) | 67 (153) |
| 5 | Henkel 80-8488 | EVA-Based | | 10.80 (1,080) | | 1.0 | 1.0 | 1.0 | 1.0 | 60 (150) | 80 (176) |
| 6 | Henkel 80-8368 | EVA-Based | | 9.70 (970) | | 1.0 | 1.0 | 1.0 | 1.0 | 61.2 (142) | 88 (190) |

* AFFINITY is a homogeneous polymer, which is a trademark of and available from The Dow Chemical Company.

These results show that combinations of these polymer and tackifier(s) can produce an adhesive with properties that can be formulated to meet the needs of a wide range of adhesive applications.

The results also show that these novel polymers, when formulated with a suitable tackifier, have adhesive properties that are either equivalent to or better than a conventional EVA hot melt adhesive which is formulated with wax and tackifier and EVA resin. The results also demonstrate that the novel polymers of the present invention, when compounded with select tackifiers, have properties comparable to a premium hot melt adhesive as demonstrated by fiber tear.

Example 4. Thermal Stability Testing

Metallocene derived ethylene resins are known to be quite thermally stable when compared to conventional EVA resins. To test the thermal stability of the present novel resins a novel ethylene octene copolymer resin of the present invention with a density of 0.9032 g/cm$^3$ were placed in a convection oven at 177 degrees C (350 degrees F). The results, shown in Table 8, illustrate the thermal stability of the novel polymer. Gardner color is a common way to measure thermal degradation of hot melt adhesives. Color generation is directly related to thermal degradation; therefore, the higher the Gardner number, the greater the color generation in the polymer.

Table 8. Thermal stability of novel polymer

| Time | Observation Gardner Color |
|---|---|
| 0 hours | 2 |
| 48 hours | +2, clear |
| 96 hours | 7, clear |

Example 5. Preparation of Ethylene/α-Olefin Interpolymers Using A Ducal Metallocene Catalyst System.

A series of ethylene/α-olefin interpolymers were also prepared in a 3.8 liter (1 gallon), oil jacketed, Autoclave continuously stirred tank reactor (CSTR). A magnetically coupled agitator with Lightning A-320 impellers provided the mixing. The reactor ran liquid full at 3,275 kPa (475 psig). Process flow was in at the bottom and out of the top. A heat transfer oil was circulated through the jacket of the reactor to remove some of the heat of reaction. At the exit of the reactor was a Micro-Motion™ flow meter that measured flow and solution density. All lines on the exit of the reactor were traced with 344.7 kPa (50 psi) steam and insulated.

ISOPAR-E solvent and comonomer were supplied to the reactor at 206.8 kPa (30 psig) pressure. The solvent feed to the reactors was measured by a Micro-Motion™ mass flow meter. A variable speed diaphragm pump controlled the solvent flow rate and increased the solvent pressure to reactor pressure. The comonomer was metered by a Micro-Motion™ mass flow meter and flow controlled by a Research control valve. The comonomer stream was mixed with the solvent stream at the suction of the solvent pump and was pumped to the reactor with the solvent. The remaining solvent was combined with ethylene and (optionally) hydrogen and delivered to the reactor. The ethylene stream was measured by a Micro-Motion™ mass flow meter just prior to the Research valve controlling flow. Three Brooks flow meter/controllers ( 1 - 200 sccm and 2 - 100sccm) were used to deliver hydrogen into the ethylene stream at the outlet of the ethylene control valve.

The ethylene or ethylene / hydrogen mixture combined with the solvent / comonomer stream at ambient temperature. The temperature of the solvent/monomer as it enters the reactor was controlled with two heat exchangers. This stream enters the bottom of the 3.8 liter (1 gallon) CSTR.

In an inert atmosphere box, a solution of the transition metal compounds was prepared by mixing the appropriate volumes of concentrated solutions of each of the two components with solvent to provide the final catalyst solution of known concentration and composition. This solution was transferred under nitrogen to a pressure vessel attached to a high-pressure metering pump for transport to the polymerization reactor.

In the same inert atmosphere box, solutions of the primary cocatalyst, methylbis(hydrogenatedtallowalkyl) ammonium tetrakis (pentafluoro phenyl) borate and the secondary cocatalyst, MMAO Type 3A, were prepared in solvent and transferred to separate pressure vessels as described for the catalyst solution. The ratio of Al to the transition metal ("TM") and Boron to TM was established by controlling the volumetric flow output if the individual metering pumps to attain the molar ratios in the polymerization reactor as presented in Table 9. The three component catalyst system and its solvent flush also enter the reactor at the bottom but through a different port than the monomer stream.

Polymerization was stopped with the addition of catalyst kill into the reactor product line after the meter measuring the solution density. Other polymer additives could be added with the catalyst kill. The reactor effluent stream then

entered a post reactor heater that provides additional energy for the solvent removal flash. This flash occurs as the effluent exits the post reactor heater and the pressure is dropped from 3,275 kPa (475 psig) down to 68.94 kPa (10 psig) at the reactor pressure control valve.

This flashed polymer entered a hot oil jacketed devolatilizer. Approximately 90 % of the volatiles were removed from the polymer in the devolatilizer. The volatiles exit the top of the devolatilizer. The remaining stream is condensed with a chilled water jacketed exchanger and then enters a glycol jacket solvent / ethylene separation vessel. Solvent is removed from the bottom of the vessel and ethylene vents from the top. The ethylene stream is measured with a Micro-Motion™ mass flow meter. This measurement of unreacted ethylene was used to calculate the ethylene conversion. The polymer separated in the devolatilizer and was pumped out with a gear pump. The product is collected in lined pans and dried in a vacuum oven at 140°C for 24 hr.

Additives (for example, antioxidants, pigments, etc.) could be incorporated into the interpolymer products and all polymers could be stabilized with approximately 1000 ppm IRGANOX® 1010 and 2000 ppm IRGAFOS 168. Both IRGANOX® and IRGAFOS™ are made by and trademarks of Ciba Geigy Corporation. IRGAFOS™ 168 is a phosphite stabilizer and IRGANOX® 1010 is a hindered polyphenol stabilizer (e.g., tetrakis [methylene 3-(3,5-di *t*-butyl-4-hydroxyphenylpropionate)]-methane. Table 9 summarizes the polymerization conditions and Table 10 the properties of the resulting polymers.

Table 9 - Ethylene/α-Olefin Interpolymer Preparation Conditions*

| E # | Reactor Temp °C | Solvent Flow lb/hr | Ethylene Flow lb/hr | Octene Flow lb/hr | Hydrogen Flow sccm | C2 Conversion (%) | B[a]/rr Molar Ratio | MMAO[b]/T Molar Rati | Catalyst | Mole Ratio Cataly t |
|---|---|---|---|---|---|---|---|---|---|---|
| 1 | 150.32 | 25.20 | 2.68 | 1.25 | 174.48 | 89.47 | 1.21 | 10.07 | CATS-1/2 | 1:1 |
| 2 | 150.50 | 25.76 | 2.65 | 0.86 | 111.75 | 89.69 | 1.47 | 6.01 | CATS-1/2 | 1:3 |
| 3 | 150.38 | 25.80 | 2.65 | 0.76 | 113.80 | 90.37 | 1.51 | 6.04 | CATS-1/2 | 1:3 |
| 4 | 149.88 | 25.77 | 2.65 | 0.85 | 150.33 | 80.15 | 1.37 | 5.96 | CATS 1/2 | 1:3 |
| 5 | 129.73 | 20.87 | 2.65 | 1.03 | 97.77 | 90.46 | 1.47 | 5.99 | CATS 3/1 | 1:1 |
| 6 | 130.03 | 20.81 | 2.65 | 1.06 | 69.90 | 90.13 | 1.48 | 5.83 | CATS 3/1 | 20:1 |
| 7 | 119.13 | 20.78 | 2.65 | 1.17 | 47.98 | 90.03 | 1.49 | 5.93 | CATS 3/1 | 20:1 |
| 8 | 149.65 | 25.51 | 2.65 | 1.00 | 83.20 | 90.40 | 1.06 | 4.95 | CATS-4/1 | 1:1 |
| 9 | 120.28 | 25.20 | 2.65 | 1.60 | 13.45 | 90.44 | 1.08 | 4.91 | CATS 3/1 | 10:1 |
| 1 0 | 150.20 | 25.60 | 2.65 | 0.73 | 121.97 | 90.35 | 1.08 | 4.95 | CATS 4/2 | 1:2 |

[a]The primary cocatalyst for all polymerisations was Armeenium Borate [methylbis(hydrogenatedtallowalkyl) ammonium tetrakis (pentafluoro phenyl) borate prepared as in U. S. Patent # 5,919,983, Ex. 2. [b]The secondary cocatalyst for all polymerizations was a modified methylaluminoxane (MMAO) available from Akzo Nobel as MMAO-3A (CAS# 146905-79-10).

[c]for Examples 1-4, 8 and 10 in Table 11 the term Tr refers to the total titanium content of the mixed catalyst system. For runs 5-7 and 9 the term Tr refers to the Zr content only of the mixed catalyst system.

[d]CAT 1 was ($C_5Me_4SiMe_2N^tBu$)Ti($\eta^4$-1,3-pentadiene) prepared according to Example 17 of US Patent 5,556,928. CAT 2 was (1H-cyclopenta[1]-phenanthrene-2-yl)dimethyl (t-butylamido) silanetitanium dimethyl prepared according to Examples 1 and 2 of US Patent 5,150,297. CAT 3 was ($C_5Me_4SiMe_2N^tBu$)$ZrMe_2$ Prepared according to Examples 1 and 86 of US Patent 5,703,187. CAT 4 was [N-(1,1-dimethylethyl)-1,1-dimethyl-1-[1,2,3,4,5-η)-3,4-diphenyl-2,4-cyclopentadienyl-1-yl]silanaminato(2)-κN]-dimethyl-titanium, prepared according to Examples 1 and 2 of WO 02/092610,.

Table 10 - Properties of Ethylene/α-Octene Interpolymers

| Polymer # | Viscosity @ 149°C (grams/ (cm. second) (300 °F (cP) | Density (g/cm$^3$ ) | $M_w$ | $M_n$ | $M_w$/ $M_n$ | Wt% Com. | Mol % Com . | Drop Point (°C) | $T_m$ 1 (°C) | $T_m$ 2 (°C) | Heat of Fusion (J/g) | % Cryst | $T_c$ 1 (°C) | $T_c$ 2 °C) |
|---|---|---|---|---|---|---|---|---|---|---|---|---|---|---|
| 1 | 16.00 (1,600) | 0.8941 | 9,570 | 4,180 | 2.29 | 23.40 | 7.10 | 113.3 | 81.2 | 107.0 | 96.2 | 33 | 97.1 | 55.0 |
| 2 | 28.79 (2,879) | 0.9040 | 11,240 | 5,030 | 2.23 | 19.80 | 5.81 | 116.9 | 86.3 | 110.3 | 113.3 | 39 | 99.8 | 73.4 |
| 3 | 28.59 (2,859) | 0.9083 | 11,300 | 5,220 | 2.16 | 18.30 | 5.30 | 117.8 | 89.4 | 111.4 | 121.4 | 42 | 101.2 | 77.1 |
| 4 | 27.44 (2,744) | 0.9092 | 10,900 | 5,060 | 2.15 | 18.10 | 5.23 | 118.4 | 90.0 | 112.3 | 125.9 | 43 | 102.7 | 78.2 |
| 5 | 28.04 (2,804) | 0.9091 | 11,200 | 2,700 | 4.15 | 18.40 | 5.34 | 109.6 | 103.3 | | 120.7 | 41 | 91.1 | 52.1 |
| 6 | 28.89 (2,889) | 0.9089 | 12,000 | 2,080 | 5.77 | 18.90 | 5.50 | 112.1 | 95.1 | 107.2 | 125.8 | 43 | 94.7 | |
| 7 | 26.84 (2,684) | 0.9052 | 12,800 | 1,590 | 8.05 | 19.30 | 5.64 | 113.5 | 93.7 | 110.2 | 130.9 | 45 | 97.1 | 81.1 |
| 8 | 30.47 (3,047) | 0.9086 | 11,000 | 4,610 | 2.39 | 17.7 | 5.1 | 109.6 | 96.7 | 103.3 | 130.2 | 45 | 93.6 | 54.2 |
| 9 | 31.13 (3,113) | 0.9067 | 17,000 | 1,130 | 15.04 | 18.8 | 5.5 | 116.1 | 93.1 | 113.7 | 136.7 | 47 | 100.8 | |
| 10 | 28.55 (2,855) | 0.9084 | 10,800 | 3,940 | 2.74 | 18.1 | 6.3 | 114.6 | 93.3 | 105.6 | 134.7 | 46 | 95.0 | 82.3 |

Example 6. Preparation of Adhesive Formulations with Tackifier, Using Ethylene/α-Olefin Interpolymers of Example 5.

As has been described previously in Example 2, ingredients for the hot melt adhesive compositions were blended in a metal container to a total weight of 100g. Tackifier resin was added into the container and allowed to heat for 10 minutes with a heating mantle for temperature control. The polymer was slowly added over 3-5 minutes. Once melted, the ingredients were mixed by hand using a metal spatula at a moderate rate of speed. After complete addition of the polymer, the adhesive was allowed to mix an additional 15 minutes to assure uniformity. The final adhesive temperature in all cases was 177°C-182°C (350-360° F).

Example 7. Evaluation of Adhesive Formulations.

The properties of the adhesive formulations of Example 6 are summarized in Table 11 and compared with the properties of the commercially available adhesives summarized in Table 7.

Table 11. Properties of Hot Melt Adhesives Made From Ethylene/Octene Interpolymer of the Present Invention

| Polymer Ex # | Polymer (wt%) | Escorez 5637 (wt%) | Fiber Tear (%) | | | | | PAFT (°)C/ (°F) | SAFT (°C)/ (°F) | Viscosity @ 177°C (grams/ (cm.second) (350 °F (cP)) |
|---|---|---|---|---|---|---|---|---|---|---|
| | | | minus 18 °C (0°F) | 2 °C (35°F) | 25 °C (77°F) | 49 °C (120°F) | 60 °C (140°F) | | | |
| 1 | 78 | 22 | 0 | 25 | | 100 | 100 | 43 (110) | 92.2 (205) | 11.15 (1,115) |
| 1 | 73 | 27 | 0 | 0 | | 100 | 100 | 48.4 (119) | 95.1 (203) | 10.50(1,050) |
| 1 | 68 | 32 | 0 | 0 | | 100 | 100 | 53.4 (128) | 94 (201) | 9.50 (950) |
| 2 | 78 | 22 | 0 | 100 | 100 | 100 | 75 | 43 (110) | 99.5 (211) | 10.60 (1,060) |
| 2 | 73 | 27 | 0 | 100 | 100 | 100 | 100 | 48 (118/) | 98 (208) | 9.35 (935) |
| 2 | 68 | 32 | 0 | 0 | 100 | 100 | 100 | 55 (131) | 98(208) | 8.20(820) |
| 3 | 78 | 22 | 0 | 50 | 100 | 100 | 100 | 43 (110) | 102 (215) | 10.80 (1,080) |
| 3 | 73 | 27 | 0 | 25 | 100 | 100 | 100 | 56(132) | 100(212) | 9.80(980) |
| 3 | 68 | 32 | 0 | 0 | 100 | 100 | 100 | 69 (156) | 99.5 (211) | 6.60 (660) |
| 4 | 78 | 22 | 0 | 50 | 100 | 100 | 75 | 49 (120) | 102 (215) | 5.70 (570) |
| 4 | 73 | 27 | 0 | 25 | 100 | 100 | 100 | 50 (122) | 100.6 (213) | 5.00 (500) |
| 4 | 68 | 32 | 0 | 0 | 100 | 100 | 100 | 56(132) | 99.5 (211) | 4.70(470) |
| 5 | 78 | 22 | 0 | 100 | 100 | 100 | 50 | 44 (111) | 95.1 (203) | 10.50 (1,050) |
| 5 | 73 | 27 | 0 | 25 | 100 | 100 | 100 | 46 (115) | 94.5 (202) | 9.60 (960) |
| 5 | 68 | 32 | 0 | 0 | 100 | 100 | 100 | 48 (118) | 93.4 (200) | 8.60 (860) |
| 6 | 78 | 22 | 10 | 50 | 100 | 100 | 100 | 40 (104) | 95.1 (203) | 10.00 (1,000) |
| 6 | 73 | 27 | 0 | 10 | 100 | 100 | 100 | 46 (115) | 94.5 (202) | 9.45 (945) |
| 6 | 68 | 32 | 0 | 0 | 100 | 100 | 100 | 51.1 (124) | 93.4 (200) | 8.50 (850) |

(continued)

| Polymer Ex # | Polymer (wt%) | Escorez 5637 (wt%) | Fiber Tear (%) | | | | | PAFT (°)C/(°F) | SAFT (°C)/(°F) | Viscosity @ 177°C (grams/(cm.second) (350 °F (cP)) |
|---|---|---|---|---|---|---|---|---|---|---|
| | | | minus 18 °C (0°F) | 2 °C (35°F) | 25 °C (77°F) | 49 °C (120°F) | 60 °C (140°F) | | | |
| 7 | 78 | 22 | 25 | 25 | NM* | 50 | 50 | 35 (95) | 98.4 (209) | 9.25 (925) |
| 7 | 73 | 27 | 0 | 25 | 100 | 100 | 75 | 42.8 (109) | 97.3 (207) | 8.40 (840) |
| 7 | 68 | 32 | 0 | 0 | 100 | 100 | 100 | 53 (127) | 95.2 (205) | 7.55 (755) |
| 8 | 83 | 17 | 0 | 100 | NM | 100 | 100 | 32 (90) | 101.2 (214) | 13.00 (1300) |
| 8 | 78 | 22 | 0 | 50 | NM | 100 | 100 | 42.8 (109) | 98 (208) | 12.05 (1205) |
| 8 | 73 | 27 | 0 | 0 | NM | 100 | 100 | 52.3 (126) | 97.3 (207) | 11.00 (1100) |
| 8 | 68 | 32 | 0 | 0 | NM | 100 | 100 | 53.4 (128) | 97.3 (207) | 10.35 (1035) |
| 9 | 83 | 17 | 100 | 100 | NM | 50 | 0 | 32 (90) | 100 (212) | 11.40 (1140) |
| 9 | 78 | 22 | 100 | 100 | NM | 100 | 0 | 32 (90) | 99 (210) | 10.70 (1070) |
| 9 | 73 | 27 | 75 | 100 | NM | 100 | 75 | 32 (90) | 98 (208) | 9.30 (930) |
| 9 | 68 | 32 | 0 | 100 | NM | 100 | 100 | 44(111) | 98(208) | 8.10(810) |
| 10 | 83 | 17 | 0 | 100 | NM | 100 | 100 | 41(105) | 95.2(205) | 11.75 (1175) |
| 10 | 78 | 22 | 0 | 100 | NM | 100 | 100 | 44.5 (112) | 95.6(204) | 11.15 (1115) |
| 10 | 73 | 27 | 0 | 0 | NM | 100 | 100 | 52.3 (126) | 94.5 (202) | 10.40 (1040) |
| 10 | 68 | 32 | 0 | 0 | NM | 100 | 100 | 55 (131) | 95.1 (203) | 9.20 (920) |
| * NM = not measured | | | | | | | | | | |

## Claims

1. A hot melt adhesive composition consisting essentially of:

A) from about 60 to about 85 percent by weight (based on the final weight of the hot melt adhesive composition) of a homogeneous ethylene/$\alpha$-olefin interpolymer, the homogeneous ethylene/$\alpha$-olefin interpolymer being **characterized by** having a number average molecular weight (Mn) of from about 1,000 to about 7,000; and
B) from about 15 to about 40 percent by weight (based on the final weight of the hot melt adhesive composition) of one or more tackifiers, and wherein in the adhesive composition:
C) the homogeneous ethylene/$\alpha$-olefin interpolymer is further **characterized by** having:

i) a density of from about 0.880 to about 0.930 g/$cm^3$; and
ii) a Brookfield Viscosity (measured at 149°C) ((300°F)) of from about 5 to about 70 grams/(cm.second) (about 500 to about 7,000 cP); and

D) the hot melt adhesive composition is **characterized by** having:

i) a Brookfield Viscosity (measured at 177°C) ((350°F)) of from about 4 to about 20 grams/(cm.second) (about 400 to about 2,000 cP);
ii) a Peel Adhesion Failure Temperature ("PAFT") of greater than or equal to 43°C (110°F); and
iii) a Shear Adhesion Failure Temperature ("SAFT") of greater than or equal to 60°C (140°F).

2. The hot melt adhesive composition of Claim 1 wherein:

A) the homogeneous ethylene/$\alpha$-olefin interpolymer is present in an amount of from about 65 to about 80 percent by weight (based on the final weight of the hot melt adhesive composition) and the homogeneous ethylene/$\alpha$-olefin interpolymer is further **characterized by** having:

i) a density of from about 0.890 to about 0.920 g/$cm^3$;
ii)a number average molecular weight (Mn) of from about 1,250 to about 7,000; and
iii) a Brookfield Viscosity (measured at 149°C) ((300°F)) of from about 10 to about 60 grams/(cm.second) (about 1,000 to about 6,000 cP); and

B) the one or more tackifiers is present in an amount of from about 20 to about 35 percent by weight (based on the final weight of the hot melt adhesive composition); and wherein
C) the hot melt adhesive composition is **characterized by**:

i) having a Brookfield Viscosity (measured at 177°C) ((350°F)) of from about 5 to about 14 grams/(cm.second) (about 500 to about 1,400 cP);
ii) having a Peel Adhesion Failure Temperature ("PAFT") of greater than or equal to 46°C (115°F);
iii) having a Shear Adhesion Failure Temperature ("SAFT") of greater than or equal to 66°C (150°F); and
iv) exhibiting 100% paper tear at a temperature range of 2°C- 60°C (35°F - 140°F).

3. The hot melt adhesive composition of Claim 1, wherein:

A) the homogeneous ethylene/$\alpha$-olefin interpolymer is further **characterized by** having:

i) a density of from about 0.895 to about 0.915 g/$cm^3$;
ii) a number average molecular weight (Mn) of from about 1,500 to about 6,000; and
iii) a Brookfield Viscosity (measured at 149°C) ((300°F)) of from about 15 to about 50 grams/(cm.second) (about 1,500 to about 5,000 cP); and

B) the hot melt adhesive composition is **characterized by**:

i) having a Brookfield Viscosity (measured at 177°C) ((350°F)) of from about 7.5 to about 12 grams/(cm.second) (about 750 to about 1,200 cP);
ii) having a Peel Adhesion Failure Temperature ("PAFT") of greater than or equal to 49°C (120°F);
iii) having a Shear Adhesion Failure Temperature ("SAFT") of greater than or equal to 77°C (170°F); and

iv) exhibits 100% paper tear at a temperature range of minus 18°C to 60°C (0°F - 140°F).

**4.** The hot melt adhesive composition of Claim 1 wherein:

A) the homogeneous ethylene/α-olefin interpolymer is further **characterized by** having:

i) a density of from about 0.893 to about 0.930 $g/cm^3$;
ii) a number average molecular weight (Mn) of from about 1000 to about 6,000; and
iii) a Brookfield Viscosity (measured at 149°C) ((300°F)) of from about 15 to about 50 grams/(cm.second) (about 1,500 to about 5,000 cP); and

B) the hot melt adhesive composition is **characterized by**:

i) having a Brookfield Viscosity (measured at 177°C) ((350°F)) of from about 4 to about 14 grams/(cm.second) (about 400 to about 1,400 cP);
ii) having a Peel Adhesion Failure Temperature ("PAFT") of greater than or equal to 32°C (90°F);
iii) having a Shear Adhesion Failure Temperature ("SAFT") of greater than or equal to 93°C. (200°F); and
iv) exhibits 100% paper tear at 60°C (140°F).

**5.** The hot melt adhesive composition of Claim 4 wherein;

A) the homogeneous ethylene/α-olefin interpolymer is **characterized by** having:

i) a density of from about 0.894 to about 0.910 $g/cm^3$;
ii) a number average molecular weight (Mn) of from about 1100 to about 5,300; and
iii) a Brookfield Viscosity (measured at 149°C) ((300°F)) of from about 16 to about 32 grams/(cm.second) (about 1,600 to about 3,200 cP); and

B) the hot melt adhesive composition is **characterized by**:

i) having a Brookfield Viscosity (measured at 177°C) ((350°F)) of from about 7 to about 12 grams/(cm.second) (about 700 to about 1,200 cP);
ii) having a Peel Adhesion Failure Temperature ("PAFT") of greater than or equal to 32°C (90°F);
iii) having a Shear Adhesion Failure Temperature ("SAFT") of greater than or equal to 93°C.(200°F) ; and
iv) exhibits 100% paper tear at 60°C (140°F).

**6.** The hot melt adhesive composition of any of Claims 1, 2, 3, or 5 wherein;

A) the homogeneous ethylene/α-olefin interpolymer is an interpolymer of ethylene and one or more $C_3$-$C_{30}$ α-olefins; and
B) the one or more tackifiers is selected from the group consisting of aliphatic hydrocarbon resins, hydrogenated hydrocarbon resins, $C_5$ aliphatic or aromatic hydrocarbon resins or an aromatically modified $C_5$ aliphatic or aromatic hydrocarbon resins and combinations thereof; and

wherein the adhesive composition is capable of binding a fibrous cellulosic article to an article selected from the group consisting of a fibrous cellulosic article, wood, metal, glass, plastic, and combinations thereof..

**7.** The hot melt adhesive composition of Claims 3 or 4 wherein;

A) in the homogeneous ethylene/α-olefin interpolymer, the α-olefin is selected from the group consisting of $C_3$ (propylene); $C_8$ (1-octene); $C_{10}$ (1-decene), $C_{12}$ (1-dodecene), $C_{14}$ (1-duodecene), $C_{14}$ (1-tetradecene), $C_{16}$ (1-hexadecene), $C_{18}$ (1-octadecene), $C_{20-24}$+, $C_{24-28}$ and $C_{30}$ and combinations thereof; and
B) the one or more tackifiers is **characterized by** having an acid number between 0 to and about 25.8.

**8.** The hot melt adhesive composition of Claim 6 or 7, further comprising one or more compounds chosen from the group consisting of stabilizers, plasticizers, fillers, antioxidants, preservatives, synergists, dyes, and pigments.

**9.** The hot melt adhesive composition of Claim 7, wherein the α-olefin is selected from the group consisting of 1-octene

and propylene.

**10.** The hot melt adhesive composition of Claim 7 or 9, wherein the copolymer has a molecular weight distribution (Mw/Mn) ranging from about 2.1 - about 16.

**11.** The hot melt adhesive composition of Claim 7, 9 or 10, wherein the tackifier is present in an amount of from about 15 to about 35 percent by weight (based on the final weight of the hot melt adhesive composition).

**12.** A cellulosic article formed using a hot using a hot melt adhesive composition, the adhesive composition consisting essentially of:

A) from about 60 to about 85 percent by weight (based on the final weight of the hot melt adhesive composition) of a homogeneous ethylene/α-olefin interpolymer, the homogeneous ethylene/α-olefin interpolymer being **characterized by** having a number average molecular weight (Mn) of from about 1,000 to about 7,000; and
B) from 15 to about 40 percent by weight (based on the final weight of the hot melt adhesive composition) of one or more tackifiers, and wherein in the hot melt adhesive composition:
C) the homogeneous ethylene/α-olefin interpolymer is further **characterized by** having:

i) a density of from about 0.880 to about 0.9.30 g/cm$^3$; and
ii) a Brookfield Viscosity (measured at 149°C) ((300°F)) of from about 5 to about 70 grams/(cm.second) (about 500 to about 7,000 cP); and

D) the hot melt adhesive composition is **characterized by** having:

i) a Brookfield Viscosity (measured at 177°C) ((350°F)) of from about 4 to about 20 grams/(cm.second) (about 400 to about 2,000 cP);
ii) a Peel Adhesion Failure Temperature ("PAFT") of greater than or equal to 43°C (110°F); and
iii) a Shear Adhesion Failure Temperature ("SAFT") of greater than or equal to 60°C (140°F).

**13.** The cellulosic article of Claim 12, wherein in the hot melt adhesive composition;

A) the homogeneous ethylene/α-olefin interpolymer is present in an amount of from about 65 to about 80 percent by weight (based on the final weight of the hot melt adhesive composition) and the homogeneous ethylene/α-olefin interpolymer is further **characterized by** having:

i) a density of from about 0.890 to about 0.920 g/cm$^3$;
ii)a number average molecular weight (Mn) of from about 1,250 to about 7,000; and
iii) a Brookfield Viscosity (measured at 149°C) ((300°F)) of from about 10 to about 60 grams/(cm.second) (about 1,000 to about 6,000 cP ); and

B) the one or more tackifiers is present in an amount of from about 20 to about 35 percent by weight (based on the final weight of the hot melt adhesive composition); and wherein
C) the hot melt adhesive composition is **characterized by**:

i) having a Brookfield Viscosity (measured at 177°C) ((350°F)) of from about 5 to about 14 grams/(cm.second) (about 500 to about 1,400 cP);
ii) having a Peel Adhesion Failure Temperature ("PAFT") of greater than or equal to 46°C (115°F);
iii) having a Shear Adhesion Failure Temperature ("SAFT") of greater than or equal to 66°C (150°F); and
iv) exhibiting 100% paper tear at 60°C (140°F).

**14.** The cellulosic article of Claim 12 wherein in the hot melt adhesive composition:

A) the homogeneous ethylene/o-olefin interpolymer is further **characterized by** having:

i) a density of from about 0.893 to about 0.930 g/cm$^3$;
ii) a number average molecular weight (Mn) of from about 1,000 to about 6,000; and
iii) a Brookfield Viscosity (measured at 149°C) ((300°F)) of from about 15 to about 50 grams/(cm.second) (about 1,500 to about 5,000 cP); and

B) the hot melt adhesive composition is **characterized by**:

i) having a Brookfield Viscosity (measured at 177°C) ((350°F)) of from about 4 to about 14 grams/(cm.second) (about 400 to about 1,400 cP) ;
ii) having a Peel Adhesion Failure Temperature ("PAFT") of greater than or equal to 32°C (90°F);
iii) having a Shear Adhesion Failure Temperature ("SAFT") of greater than or equal to 93°C. (200°F.); and
iv) exhibits 100% paper tear at 49°C (120°F).

**15.** The cellulosic article of Claim 14 wherein in the hot melt adhesive composition;

A) the homogeneous ethytene/$\alpha$-olefin interpolymer is **characterized by** having:

i) a density of from about 0.894 to about 0.910 g/cm$^3$;
ii) a number average molecular weight (Mn) of from about 1,100 to about 5,300; and
iii) a Brookfield Viscosity (measured at 149°C)((300°F)) of from about 16 to about 32 grams/(cm.second) (about 1,600 to about 3,200 cP): and

B) the hot melt adhesive composition is **characterized by**:

i) having a Brookfield Viscosity (measured at 177°C) ((3 50°F)) of from about 7 to about 12 grams/(cm.second) (about 700 to about 1,200 cP);
ii) having a Peel Adhesion Failure Temperature ("PAFT") of greater than or equal to 32°C (90°F);
iii) having a Shear Adhesion Failure Temperature ("SAFT") of greater than or equal to 93°C.(200°F) ; and
iv) exhibits 100% paper tear at 60°C (140°F).

**16.** The cellulosic article of Claims 14 or 15, wherein in the hot melt adhesive composition:

A) the homogeneous ethylene/$\alpha$-olefin interpolymer is an interpolymer of ethylene and one or more $C_3$-$C_{30}$ $\alpha$-olefins; and
B) the one or more tackifiers is selected from the group consisting of aliphatic hydrocarbon resins, hydrogenated hydrocarbon resins, $C_5$ aliphatic or aromatic hydrocarbon resins or an aromatically modified $C_5$ aliphatic or aromatic hydrocarbon resins and combinations thereof.

**17.** The cellulosic article of Claim 16, wherein in the hot melt adhesive composition;

A) in the homogeneous ethylene/$\alpha$-olefin interpolymer, the $\alpha$-olefin is selected from the group consisting of from $C_3$ (propylene), $C_8$ (1-octene); $C_{10}$ (1-decene), $C_{12}$ (1-dodecene), $C_{14}$ (1-duodecene), $C_{14}$ (1-tetradecene), $C_{16}$ (1-hexadecene), $C_{18}$ (1-octadecene), $C_{20-24}$+, $C_{24-28}$ and $C_{30}$ and combinations thereof; and
B) the one or more tackifiers is **characterized by** having an acid number between 0 to and about 25.8.

**18.** The cellulosic article of Claim 17, wherein the cellulosic article is selected from the group consisting of corrugated cardboard, kraft paper, linerboard, and paper.

**19.** A method of producing a polymer composition, the method comprising the steps of admixing:

an amount of from about 60 to about 85 percent by weight (based on the final weight of the polymer composition) of a homogeneous ethylene/$\alpha$-olefin interpolymer; the homogeneous ethylene/a-olefin interpolymer **characterized by** having:

i) a density of from about 0.880 to about 0.930 g/cm$^3$;
ii) a number average molecular weight (Mn) of from about 1,000 to about 7,000; and
iii) a Brookfield Viscosity (measured at 149°C) (300°F) of from about 5 to about 70 grams/(cm.second) (about 500 to about 7,000 cP); and

admixing an amount of from 15 to about 40 percent by weight (based on the final weight of the polymer composition) of a tackifier; and wherein
the polymer composition is **characterized by** having:

i) a Brookfield Viscosity (measured at 177°C) (350°F) of from about 4 to about 20 grams/(cm.second ) (about 400 to about 2,000 cP);
ii) a Peel Adhesion Failure Temperature ("PAFT") of greater than or equal to 43°C (110°F); and
iii) a Shear Adhesion Failure Temperature ("SAFT") of greater than or equal to 60°C (140°F).

**20.** The method as described in claim 19, wherein:

A) the homogeneous ethylene/α-olefin interpolymer is **characterized by** having:

i) a density of from about 0.893 to about 0.930 g/cm$^3$;
ii) a number average molecular weight (Mn) of from about 1,000 to about 6,000; and
iii) a Brookfield Viscosity (measured at 149°C) (300°F) of from about 15 to about 50 grams/(cm.second) (about 1,500 to about 5,000 cP); and

B) the polymer composition is **characterized by**:

i) having a Brookfield Viscosity (measured at 177°C) (350°F) of from about 4 to about 14 grams/(cm.second) (about 400 to about 1,400 cP);
ii) having a Peel Adhesion Failure Temperature ("PAFT") of greater than or equal to 32°C (90°F);
iii) having a Shear Adhesion Failure Temperature ("SAFT") of greater than or equal to 93°C. (200°F.) ; and
iv) exhibits 100% paper tear at 60°C (140°F).

## Patentansprüche

**1.** Schmelzklebstoffzusammensetzung, im Wesentlichen bestehend aus:

A) von etwa 60 bis etwa 85 Gew.-% (basierend auf dem endgültigen Gewicht der Schmelzklebstoffzusammensetzung) eines homogenen Ethylen-/α-Olefin-Interpolymers, wobei das homogene Ethylen-/α-Olefin-Interpolymer **dadurch gekennzeichnet ist, dass** es eine Anzahl eines durchschnittlichen Molgewichts (Mn) von etwa 1.000 bis etwa 7.000 aufweist; und
B) von etwa 15 bis etwa 40 Gew.-% (basierend auf dem endgültigen Gewicht der Schmelzklebstoffzusammensetzung) eines oder mehrerer Klebrigmacher und wobei bei der Schmelzklebstoffzusammensetzung:
C) das homogene Ethylen-/α-Olefin-Interpolymer ferner **dadurch gekennzeichnet ist, dass** es

i) eine Dichte von etwa 0,880 bis etwa 0,930 g/cm$^3$; sowie
ii) eine Brookfield-Viskosität (gemessen bei 149 °C) ((300°F)) von etwa 5 bis etwa 80 Gramm/cm/Sekunde) (etwa 500 bis etwa 7.000 cP) aufweist; und

D) die Schmelzklebstoffzusammensetzung **dadurch gekennzeichnet ist, dass** sie:

i) eine Brookfield-Viskosität (gemessen bei 177 °C) ((350 °F)) von etwa 4 bis etwa 20 Gramm/cm/Sekunde) (etwa 400 bis etwa 2.000 cP);
ii) eine Haftkraftfehltemperatur ("PAFT") von mehr als oder gleichwertig von 43 °C (110 °F) aufweist; und
iii) eine Scherhaftkraftfehltemperatur ("SAFT") von mehr als oder gleichwertig von 60 °C (140 °F).

**2.** Schmelzklebstoffzusammensetzung nach Anspruch 1, wobei:

A) das homogene Ethylen-/α-Olefin-Interpolymer in einer Menge von etwa 65 bis etwa 80 Gew.-% (basierend auf dem endgültigen Gewicht der Schmelzklebstoffzusammensetzung) anwesend ist und das homogene Ethylen-/α-Olefin-Interpolymer ferner **dadurch gekennzeichnet ist, dass** es:

i) eine Dichte von etwa 0,890 bis etwa 0,920 g/cm$^3$;
ii) eine Anzahl eines durchschnittlichen Molgewichts (Mn) von etwa 1.250 bis etwa 7.000; und
iii) eine Brookfield-Viskosität (gemessen bei 149 °C) ((300°F)) von etwa 10 bis etwa 60 Gramm/cm/Sekunde) (etwa 1.000 bis etwa 6.000 cP) aufweist; und

B) der eine oder die mehreren Klebrigmacher in einer Menge von etwa 20 bis etwa 35 Gew.-% (basierend auf

dem endgültigen Gewicht der Schmelzklebstoffzusammensetzung) anwesend ist; und wobei
C) die Schmelzklebstoffzusammensetzung **dadurch gekennzeichnet ist, dass** sie:

i) eine Brookfield-Viskosität (gemessen bei 177 °C) ((350°F)) von etwa 5 bis etwa 14 Gramm/cm/Sekunde) (etwa 500 bis etwa 1.400 cP);
ii) eine Haftkraftfehltemperatur ("PAFT") von mehr als oder gleichwertig von 46 °C (115 °F);
iii) eine Scherhaftkraftfehltemperatur ("SAFT") von mehr als oder gleichwertig von 66 °C (150 °F) aufweist; und
iv) eine 100%-ige Papierreißkraft in einem Temperaturbereich von 2 °C - 60 °C (35 °F - 140 °F) besitzt.

**3.** Schmelzklebstoffzusammensetzung nach Anspruch 1, wobei:

A) das homogene Ethylen-/α-Olefin-Interpolymer ferner **dadurch gekennzeichnet ist, dass** es:

i) eine Dichte von etwa 0,895 bis etwa 0,915 g/cm$^3$;
ii) eine Anzahl eines durchschnittlichen Molgewichts (Mn) von etwa 1.500 bis etwa 6.000; und
iii) eine Brookfield-Viskosität (gemessen bei 149 °C) ((300°F)) von etwa 15 bis etwa 50 Gramm/cm/Sekunde) (etwa 1.500 bis etwa 5.000 cP) aufweist; und

B) die Schmelzklebstoffzusammensetzung **dadurch gekennzeichnet ist, dass** sie:

i) eine Brookfield-Viskosität (gemessen bei 177 °C) ((350°F)) von etwa 7,5 bis etwa 12 Gramm/cm/Sekunde) (etwa 750 bis etwa 1.200 cP);
ii) eine Haftkraftfehltemperatur ("PAFT") von mehr als oder gleichwertig von 49 °C (120 °F);
iii) eine Scherhaftkraftfehltemperatur ("SAFT") von mehr als oder gleichwertig von 77 °C (170 °F) aufweist; und
iv) eine 100%-ige Papierreißkraft in einem Temperaturbereich von minus 18 °C - 60 °C (0 °F - 140 °F) besitzt.

**4.** Schmelzklebstoffzusammensetzung nach Anspruch 1, wobei:

A) das homogene Ethylen-/α-Olefin-Interpolymer ferner **dadurch gekennzeichnet ist, dass** es:

i) eine Dichte von etwa 0,893 bis etwa 0,930 g/cm$^3$;
ii) eine Anzahl eines durchschnittlichen Molgewichts (Mn) von etwa 1.000 bis etwa 6.000; und
iii) eine Brookfield-Viskosität (gemessen bei 149 °C) ((300°F)) von etwa 15 bis etwa 50 Gramm/cm/Sekunde) (etwa 1.500 bis etwa 5.000 cP) aufweist; und

B) die Schmelzklebstoffzusammensetzung **dadurch gekennzeichnet ist, dass** sie:

i) eine Brookfield-Viskosität (gemessen bei 177 °C) ((350°F)) von etwa 4 bis etwa 14 Gramm/cm/Sekunde) (etwa 400 bis etwa 1.400 cP);
ii) eine Haftkraftfehltemperatur ("SAFT) von mehr als oder gleichwertig von 32 °C (90 °F);
iii) eine Scherhaftkraftfehltemperatur ("SAFT") von mehr als oder gleichwertig von 93 °C (200 °F) aufweist; und
iv) eine 100%-ige Papierreißkraft bei 60 °C (140 °F) besitzt.

**5.** Schmelzklebstoffzusammensetzung nach Anspruch 4, wobei:

A) das homogene Ethylen-/α-Olefin-Interpolymer **dadurch gekennzeichnet ist, dass** es:

i) eine Dichte von etwa 0,894 bis etwa 0,910 g/cm$^3$;
ii) eine Anzahl eines durchschnittlichen Molgewichts (Mn) von etwa 1100 bis etwa 5.300; und
iii) eine Brookfield-Viskosität (gemessen bei 149 °C) ((300°F)) von etwa 16 bis etwa 32 Gramm/cm/Sekunde) (etwa 1.600 bis etwa 3.200 cP) aufweist; und

B) die Schmelzklebstoffzusammensetzung **dadurch gekennzeichnet ist, dass** sie:

i) eine Brookfield-Viskosität (gemessen bei 177 °C) ((350°F)) von etwa 7 bis etwa 12 Gramm/cm/Sekunde)

(etwa 700 bis etwa 1.200 cP);
ii) eine Haftkraftfehltemperatur ("PAFT") von mehr als oder gleichwertig von 32 °C (90 °F);
iii) eine Scherhaftkraftfehltemperatur ("SAFT") von mehr als oder gleichwertig von 93 °C (200 °F) aufweist; und
iv) eine 100%-ige Papierreißkraft bei 60 °C (140 °F) besitzt.

**6.** Schmelzklebstoffzusammensetzung nach einem der Ansprüche 1, 2, 3 oder 5, wobei:

A) das homogene Ethylen-/α-Olefin-Interpolymer ein Interpolymer aus Ethylen und einem oder mehreren $C_3$ - $C_{30}$-α-Olefinen ist; und
B) der eine oder die mehreren Klebrigmacher ausgewählt sind aus der Gruppe, bestehend aus aliphatischen Kohlenwasserstoffharzen, hydrierten Kohlenwasserstoffharzen, $C_5$-aliphatischen oder aromatischen Kohlenwasserstoffharzen oder aromatisch modifizierten $C_5$-aliphatischen oder aromatischen Kohlenwasserstoffharzen sowie deren Kombinationen; und

wobei die Klebstoffzusammensetzung in der Lage ist, einen faserförmigen Zelluloseartikel an einen Artikel zu binden, der ausgewählt ist aus der Gruppe bestehend aus einem faserförmigen Zelluloseartikel, Holz, Metall, Glas, Kunststoff sowie deren Kombinationen.

**7.** Schmelzklebstoffzusammensetzung nach Anspruch 3 oder 4, wobei;

A) beim homogenen Ethylen-/α-Olefin-Interpolymer das α-Olefin ausgewählt ist aus der Gruppe bestehend aus $C_3$ (Propylen); $C_8$ (1-okten); $C_{10}$ (1-deken), $C_{12}$ (1-dodeken), $C_{14}$ (1-duodeken), $C_{14}$ (1-tetradeken), $C_{16}$ (1-hexadeken), $C_{18}$ (1-oktadecen), $C_{20-28}$ und $C_{30}$ sowie deren Kombinationen; und
B) der eine oder die mehreren Klebrigmacher **dadurch gekennzeichnet sind, dass** sie eine Säureanzahl von zwischen 0 und etwa 25,8 aufweisen.

**8.** Schmelzklebstoffzusammensetzung nach Anspruch 6 oder 7, ferner umfassend eine oder mehrere Verbindungen, die ausgewählt sind aus der Gruppe bestehend aus Stabilisierungsmitteln, Plastifizierungsmitteln, Antioxidanten, Konservierungsmitteln, Komplexbildnern, Farbstoffen und Pigmenten.

**9.** Schmelzklebstoffzusammensetzung nach Anspruch 7, wobei das α-Olefin ausgewählt ist aus der Gruppe bestehend aus 1-okten und Propylen.

**10.** Schmelzklebstoffzusammensetzung nach Anspruch 7 oder 9, wobei das Copolymer eine Molgewichtsverteilung (Mw/Mn) in einem Bereich von etwa 2,1 - etwa 16 aufweist.

**11.** Schmelzklebstoffzusammensetzung nach Anspruch 7, 9 oder 10, wobei der Klebrigmacher in einer Menge von etwa 15 bis etwa 35 Gew.-% (basierend auf dem endgültigen Gewicht der Schmelzklebstoffzusammensetzung) anwesend ist.

**12.** Zelluloseartikel, der unter Anwendung einer Schmelzklebstoffzusammensetzung gebildet ist, wobei die Klebstoffzusammensetzung im Wesentlichen aus Folgendem besteht:

A) von etwa 60 bis etwa 85 Gew.-% (basierend auf dem endgültigen Gewicht der Schmelzklebstoffzusammensetzung) eines homogenen Ethylen-/α-Olefin-Interpolymers, wobei das homogene Ethylen-/α-Olefin-Interpolymer **dadurch gekennzeichnet ist, dass** es eine Anzahl eines durchschnittlichen Molgewichts (Mn) von etwa 1.000 bis etwa 7.000 aufweist; und
B) von 15 bis etwa 40 Gew.-% (basierend auf dem endgóltigen Gewicht der Schmelzklebstoffzusammensetzung) eines oder mehrerer Klebrigmacher und wobei die Schmelzklebstoffzusammensetzung Folgendes umfasst:
C) wobei das homogene Ethylen-/α-Olefin-Interpolymer ferner **dadurch gekennzeichnet ist, dass** es:

i) eine Dichte von etwa 0,880 bis etwa 0,930 $g/cm^3$; sowie
ii) eine Brookfield-Viskosität (gemessen bei 149 °C) ((300°F)) von etwa 5 bis etwa 70 Gramm/cm/Sekunde) (etwa 500 bis etwa 7.000 cP) aufweist; und

D) die Schmelzklebstoffzusammensetzung **dadurch gekennzeichnet ist, dass** sie:

i) eine Brookfield-Viskosität (gemessen bei 177 °C) ((350 °F)) von etwa 4 bis etwa 20 Gramm/cm/Sekunde) (etwa 400 bis etwa 2.000 cP);
ii) eine Haftkraftfehltemperatur ("PAFT") von mehr als oder gleichwertig von 43 °C (110 °F) aufweist; und
iii) eine Scherhaftkraftfehltemperatur ("SAFT") von mehr als oder gleichwertig von 60 °C (140 °F).

**13.** Zelluloseartikel nach Anspruch 12, wobei die Schmelzklebstoffzusammensetzung Folgendes umfasst;

A) das homogene Ethylen-/α-Olefin-Interpolymer ist anwesend in einer Menge von etwa 65 bis etwa 80 Gew.-% (basierend auf dem endgültigen Gewicht der Schmelzklebstoffzusammensetzung) und das homogene Ethylen-/α-Olefin-Interpolymer ferner **dadurch gekennzeichnet ist, dass** es

i) eine Dichte von etwa 0,890 bis etwa 0,920 g/cm$^3$;
ii) eine Anzahl eines durchschnittlichen Molgewichts (Mn) von etwa 1.250 bis etwa 7.000; und
iii) eine Brookfield-Viskosität (gemessen bei 149 °C) ((300°F)) von etwa 10 bis etwa 60 Gramm/cm/Sekunde) (etwa 1.000 bis etwa 6.000 cP) aufweist; und

B) der eine oder die mehreren Klebrigmacher in einer Menge von etwa 20 bis etwa 35 Gew.-% (basierend auf dem endgültigen Gewicht der Schmelzklebstoffzusammensetzung) anwesend ist; und wobei
C) die Schmelzklebstoffzusammensetzung **dadurch gekennzeichnet ist, dass** sie:

i) eine Brookfield-Viskosität (gemessen bei 177 °C) ((350°F)) von etwa 5 bis etwa 14 Gramm/cm/Sekunde) (etwa 500 bis etwa 1.400 cP);
ii) eine Haftkraftfehltemperatur ("PAFT") von mehr als oder gleichwertig von 46 °C(115°F);
iii) eine Scherhaftkraftfehltemperatur ("SAFT") von mehr als oder gleichwertig von 66 °C (150 °F) aufweist; und
iv) eine 100%-ige Papierreißkraft bei 60 °C (140 °F) besitzt.

**14.** Zelluloseartikel nach Anspruch 12, wobei die Schmelzklebstoffzusammensetzung Folgendes umfasst:

A) das homogene Ethylen-/α-Olefin-Interpolymer ferner **dadurch gekennzeichnet ist, dass** es

i) eine Dichte von etwa 0,893 bis etwa 0,930 g/cm$^3$;
ii) eine Anzahl eines durchschnittlichen Molgewichts (Mn) von etwa 1.000 bis etwa 6.000; und
iii) eine Brookfield-Viskosität (gemessen bei 149 °C) ((300°F)) von etwa 15 bis etwa 50 Gramm/cm/Sekunde) (etwa 1.500 bis etwa 5.000 cP) aufweist; und

B) die Schmelzklebstoffzusammensetzung **dadurch gekennzeichnet ist, dass** sie:

i) eine Brookfield-Viskosität (gemessen bei 177 °C) ((350°F)) von etwa 4 bis etwa 14 Gramm/cm/Sekunde) (etwa 400 bis etwa 1.400 cP);
ii) eine Haftkraftfehltemperatur ("PAFT") von mehr als oder gleichwertig von 32 °C (90 °F);
iii) eine Scherhaftkraftfehltemperatur ("SAFT") von mehr als oder gleichwertig von 93 °C (200 °F) aufweist; und
iv) eine 100%-ige Papierreißkraft bei 49 °C (120 °F) besitzt.

**15.** Zelluloseartikel nach Anspruch 14, wobei die Schmelzklebstoffzusammensetzung folgendes umfasst:

A) das homogene Ethylen-/α-Olefin-Interpolymer **dadurch gekennzeichnet ist, dass** es

i) eine Dichte von etwa 0,894 bis etwa 0,910 g/cm$^3$;
ii) eine Anzahl eines durchschnittlichen Molgewichts (Mn) von etwa 1.100 bis etwa 5.300; und
iii) eine Brookfield-Viskosität (gemessen bei 149 °C) ((300°F)) von etwa 16 bis etwa 32 Gramm/cm/Sekunde) (etwa 1.600 bis etwa 3.200 cP) aufweist; und

B) die Schmelzklebstoffzusammensetzung **dadurch gekennzeichnet ist, dass** sie:

i) eine Brookfield-Viskosität (gemessen bei 177 °C) ((350°F)) von etwa 7 bis etwa 12 Gramm/cm/Sekunde) (etwa 700 bis etwa 1.200 cP);

ii) eine Haftkraftfehltemperatur ("PAFT") von mehr als oder gleichwertig von 32 °C (90 °F);
iii) eine Scherhaftkraftfehltemperatur ("SAFT") von mehr als oder gleichwertig von 93 °C (200 °F) aufweist; und
iv) eine 100%-ige Papierreißkraft bei 60 °C (140 °F) besitzt.

**16.** Zelluloseartikel nach Anspruch 14 oder 15, wobei die Schmelzklebstoffzusammensetzung Folgendes umfasst:

A) das homogene Ethylen-/α-Olefin-Interpolymer ein Interpolymer aus Ethylen oder einem oder mehrerer $C_3$-$C_{30}$- α-Olefinen ist; und
B) der eine oder die mehreren Klebrigmacher ausgewählt sind aus der Gruppe bestehend aus aliphatischen Kohlenwasserstoffharzen, hydrierten Kohlenwasserstoffharzen, $C_5$-aliphatischen oder aromatischen Kohlenwasserstoffharzen oder aromatisch modifizierten $C_5$-aliphatischen oder aromatischen Kohlenwasserstoffharzen sowie deren Kombinationen.

**17.** Zelluloseartikel nach Anspruch 16, wobei die Schmelzklebstoffzusammensetzung folgendes umfasst:

A) beim homogenen Ethylen-/α-Olefin-Interpolymer das α-Olefin ausgewählt ist aus der Gruppe, bestehend aus $C_3$ (Propylen); $C_8$ (1-okten); $C_{10}$ (1-deken), $C_{12}$ (1-dodeken), $C_{14}$ (1-duodeken), $C_{14}$ (1-tetradeken), $C_{16}$ (1-hexadeken), $C_{18}$ (1-oktadeken), $C_{20-28}$ und $C_{30}$ sowie deren Kombinationen; und
B) der eine oder die mehreren Klebrigmacher **dadurch gekennzeichnet sind, dass** sie eine Säureanzahl von zwischen 0 und etwa 25,8 aufweisen.

**18.** Zelluloseartikel nach Anspruch 17, wobei der Zelluloseartikel ausgewählt ist aus der Gruppe bestehend aus Wellpappe, Kraftpapier, Deckenpapier und Papier.

**19.** Verfahren zur Herstellung einer Polymerzusammensetzung, wobei das Verfahren die nachfolgenden Schritte umfasst:

Vermischen:

einer Menge von etwa 60 bis etwa 85 Gew.-% (basierend auf dem endgültigen Gewicht der Polymerzusammensetzung) eines homogenen Ethylen-/α-Olefin-Interpolymers, wobei das homogene Ethylen-/α-Olefin-Interpolymer **dadurch gekennzeichnet ist, dass** es

i) eine Dichte von etwa 0,880 bis etwa 0,930 g/cm$^3$;
ii) eine Anzahl eines durchschnittlichen Molgewichts (Mn) von etwa 1.000 bis etwa 7.000; und
iii) eine Brookfield-Viskosität (gemessen bei 149 °C) ((300°F)) von etwa 5 bis etwa 70 Gramm/cm/Sekunde) (etwa 500 bis etwa 7.000 cP) aufweist; und

Vermischen einer Menge von etwa 15 bis etwa 40 Gew.-% (basierend auf dem endgültigen Gewicht der Polymerzusammensetzung) eines Klebrigmachers; und wobei
die Polymerzusammensetzung **dadurch gekennzeichnet ist, dass** sie:

i) eine Brookfield-Viskosität (gemessen bei 177 °C) ((350°F)) von etwa 4 bis etwa 20 Gramm/cm/Sekunde) (etwa 400 bis etwa 2.000 cP);
ii) eine Haftkraftfehltemperatur ("PAFT") von mehr als oder gleichwertig von 43 °C (110 °F);
iii) eine Scherhaftkraftfehltemperatur ("SAFT") von mehr als oder gleichwertig von 60 °C (140 °F) aufweist.

**20.** Verfahren nach Anspruch 19, wobei:

A) das homogene Ethylen-/α-Olefin-Interpolymer **dadurch gekennzeichnet ist, dass** es

i) eine Dichte von etwa 0,893 bis etwa 0,930 g/cm$^3$;
ii) eine Anzahl eines durchschnittlichen Molgewichts (Mn) von etwa 1.100 bis etwa 6.000; und
iii) eine Brookfield-Viskosität (gemessen bei 149 °C) ((300°F)) von etwa 15 bis etwa 50 Gramm/cm/Sekunde) (etwa 1.500 bis etwa 5.000 cP) aufweist; und

B) die Polymerzusammensetzung **dadurch gekennzeichnet ist, dass** sie:

i) eine Brookfield-Viskosität (gemessen bei 177 °C) ((350°F)) von etwa 4 bis etwa 14 Gramm/cm/Sekunde) (etwa 400 bis etwa 1.400 cP);
ii) eine Haftkraftfehltemperatur ("PAFT") von mehr als oder gleichwertig von 32 °C (90 °F);
iii) eine Scherhaftkraftfehltemperatur ("SAFT") von mehr als oder gleichwertig von 93 °C (200 °F) aufweist; und
iv) eine 100%-ige Papierreißkraft bei 60 °C (140 °F) besitzt.

## Revendications

**1.** Composition adhésive thermofusible majoritairement constituée de :

A) entre environ 60 et environ 85 pour cent en masse (par rapport à la masse finale de la composition adhésive thermofusible) d'un interpolymère homogène éthylène/α-oléfine, ledit interpolymère homogène éthylène/α-oléfine étant **caractérisé en ce qu'**il présente une masse moléculaire moyenne en nombre (Mn) comprise entre environ 1000 et environ 7000 ; et
B) entre environ 15 et environ 40 pour cent en masse (par rapport à la masse finale de la composition adhésive thermofusible) d'un ou de plusieurs agents tackifiants, et où, dans la composition adhésive :
C) l'interpolymère homogène éthylène/α-oléfine est en outre **caractérisé en ce qu'**il présente :

i) une densité comprise entre environ 0,880 et environ 0,930 g/$cm^3$ ; et
ii) une viscosité Brookfield (mesurée à 149 °C/300 °F) comprise entre environ 5 et environ 70 grammes/(cm.seconde) (entre environ 500 et environ 7000 cP) ; et

D) la composition adhésive thermofusible est **caractérisée en ce qu'**elle présente :

i) une viscosité Brookfield (mesurée à 177 °C/350 °F) comprise entre environ 4 et environ 20 grammes/(cm.seconde) (entre environ 400 et environ 2000 cP) ;
ii) une Température de décollement par pelage (« PAFT ») supérieure ou égale à 43 °C (110 °F) ; et
iii) une Température de décollement par cisaillement (« SAFT ») supérieure ou égale à 60 °C (140 °F).

**2.** Composition adhésive thermofusible conforme à la Revendication 1 où :

A) l'interpolymère homogène éthylène/α-oléfine est présent à une teneur comprise entre environ 65 et environ 80 pour cent en masse (par rapport à la masse finale de la composition adhésive thermofusible), et l'interpolymère homogène éthylène/α-oléfine est en outre **caractérisé en ce qu'**il présente :

i) une densité comprise entre environ 0,890 et environ 0,920 g/$cm^3$ ;
ii) une masse moléculaire moyenne en nombre (Mn) comprise entre environ 1250 et environ 7000 ; et
iii) une viscosité Brookfield (mesurée à 149 °C/300 °F) comprise entre environ 10 et environ 60 grammes/(cm.seconde) (entre environ 1000 et environ 6000 cP) ; et

B) le ou les agents tackifiants sont présents à une teneur comprise entre environ 20 et environ 35 pour cent en masse (par rapport à la masse finale de la composition adhésive thermofusible) ; et où
C) la composition adhésive thermofusible est **caractérisée en ce qu'**elle présente :

i) une viscosité Brookfield (mesurée à 177 °C/350 °F) comprise entre environ 5 et environ 14 grammes/(cm.seconde) (entre environ 500 et environ 1400 cP) ;
ii) une Température de décollement par pelage (« PAFT ») supérieure ou égale à 46 °C (115 °F) ;
iii) une Température de décollement par cisaillement (« SAFT ») supérieure ou égale à 66 °C (150 °F) ; et
iv) 100 % au test de déchirement du papier dans un intervalle de température compris entre 2 °C et 60 °C (35 °F et 140 °F).

**3.** Composition adhésive thermofusible conforme à la Revendication 1, où :

A) l'interpolymère homogène éthylène/α-oléfine est en outre **caractérisé en ce qu'**il présente :

i) une densité comprise entre environ 0,895 et environ 0,915 g/cm$^3$ ;
ii) une masse moléculaire moyenne en nombre (Mn) comprise entre environ 1500 et environ 6000 ; et
iii) une viscosité Brookfield (mesurée à 149 °C/300 °F) comprise entre environ 15 et environ 50 grammes/(cm.seconde) (entre environ 1500 et environ 5000 cP) ; et

B) la composition adhésive thermofusible est **caractérisée en ce qu'**elle présente :

i) une viscosité Brookfield (mesurée à 177 °C/350 °F) comprise entre environ 7,5 et environ 12 grammes/(cm.seconde) (entre environ 750 et environ 1200 cP) ;
ii) une Température de décollement par pelage (« PAFT ») supérieure ou égale à 49 °C (120 °F) ;
iii) une Température de décollement par cisaillement (« SAFT ») supérieure ou égale à 77 °C (170 °F) ; et
iv) 100 % au test de déchirement du papier dans un intervalle de température compris entre - 18 °C et 60 °C (0 °F et 140 °F).

**4.** Composition adhésive thermofusible conforme à la Revendication 1 où :

A) l'interpolymère homogène éthylène/$\alpha$-oléfine est en outre **caractérisé en ce qu'**il présente :

i) une densité comprise entre environ 0,893 et environ 0,930 g/cm$^3$ ;
ii) une masse moléculaire moyenne en nombre (Mn) comprise entre environ 1000 et environ 6000 ; et
iii) une viscosité Brookfield (mesurée à 149 °C/300 °F) comprise entre environ 15 et environ 50 grammes/(cm.seconde) (entre environ 1500 et environ 5000 cP) ; et

B) la composition adhésive thermofusible est **caractérisée en ce qu'**elle présente :

i) une viscosité Brookfield (mesurée à 177 °C/350 °F) comprise entre environ 4 et environ 14 grammes/(cm.seconde) (entre environ 400 et environ 1400 cP) ;
ii) une Température de décollement par pelage (« PAFT ») supérieure ou égale à 32 °C (90 °F) ;
iii) une Température de décollement par cisaillement (« SAFT ») supérieure ou égale à 93 °C (200 °F) ; et
iv) 100 % au test de déchirement du papier à 60 °C (140 °F).

**5.** Composition adhésive thermofusible conforme à la Revendication 4 où :

A) l'interpolymère homogène éthylène/$\alpha$-oléfine est **caractérisé en ce qu'**il présente :

i) une densité comprise entre environ 0,894 et environ 0,910 g/cm$^3$ ;
ii) une masse moléculaire moyenne en nombre (Mn) comprise entre environ 1100 et environ 5300 ; et
iii) une viscosité Brookfield (mesurée à 149 °C/300 °F) comprise entre environ 16 et environ 32 grammes/(cm.seconde) (entre environ 1600 et environ 3200 cP) ; et

B) la composition adhésive thermofusible est **caractérisée en ce qu'**elle présente :

i) une viscosité Brookfield (mesurée à 177 °C/350 °F) comprise entre environ 7 et environ 12 grammes/(cm.seconde) (entre environ 700 et environ 1200 cP) ;
ii) une Température de décollement par pelage (« PAFT ») supérieure ou égale à 32 °C (90 °F) ;
iii) une Température de décollement par cisaillement (« SAFT ») supérieure ou égale à 93 °C (200 °F) ; et
iv) 100 % au test de déchirement du papier à 60 °C (140 °F).

**6.** Composition adhésive thermofusible conforme à l'une quelconque des Revendications 1, 2, 3 ou 5 où :

A) l'interpolymère homogène éthylène/a-oléfine est un interpolymère d'éthylène et d'une ou de plusieurs a-oléfines en $C_3$-$C_{30}$ ; et
B) le ou les agents tackifiants sont choisis au sein du groupe constitué par les résines hydrocarbonées aliphatiques, les résines hydrocarbonées halogénées, les résines hydrocarbonées aromatiques ou aliphatiques en $C_5$ et les résines hydrocarbonées aromatiques ou aliphatiques en $C_5$ modifiées aromatiques et leurs combinaisons ; et où la composition adhésive est susceptible de lier un article en fibres de cellulose à un article choisi au sein du groupe constitué par un article en fibres de cellulose, le bois, le métal, le verre, le plastique, et leurs combinaisons.

**7.** Composition adhésive thermofusible conforme aux Revendications 3 ou 4 où :

A) dans l'interpolymère homogène éthylène/α-oléfine, la α-oléfine est sélectionnée au sein du groupe constitué par $C_3$ (propylène) ; $C_8$ (1-octène) ; do (1-décène), $C_{12}$ (1-dodécène), $C_{14}$ (1-duodécène), $C_{14}$ (1-tétradécène), $C_{16}$ (1-hexadécène), $C_{18}$ (1-octadécène), $C_{20-24}$+, $C_{24-28}$ et $C_{30}$, et leurs combinaisons ; et
B) le ou les agents tackifiants sont **caractérisés en ce qu'**ils présentent un indice d'acidité compris entre 0 et environ 25,8.

**8.** Composition adhésive thermofusible conforme à la Revendication 6 ou 7, comprenant en outre un ou plusieurs composés sélectionnés au sein du groupe constitué par les stabilisants, les plastifiants, les charges, les antioxydants, les conservateurs, les agents synergiques, les teintes et les pigments.

**9.** Composition adhésive thermofusible conforme à la Revendication 7, où la α-oléfine est sélectionnée au sein du groupe constitué par le 1-octène et le propylène.

**10.** Composition adhésive thermofusible conforme à la Revendication 7 ou 9, où le copolymère présente une distribution de masses moléculaires (Mw/Mn) comprise entre environ 2,1 et environ 16.

**11.** Composition adhésive thermofusible conforme à la Revendication 7, 9 ou 10, où l'agent tackifiant est présent à une teneur comprise entre environ 15 et environ 35 pour cent en masse (par rapport à la masse finale de la composition adhésive thermofusible).

**12.** Article cellulosique formé en utilisant une composition adhésive thermofusible, la composition adhésive étant majoritairement constituée de :

A) entre environ 60 et environ 85 pour cent en masse (par rapport à la masse finale de la composition adhésive thermofusible) d'un interpolymère homogène éthylène/α-oléfine, ledit interpolymère homogène éthylène/α-oléfine étant **caractérisé en ce qu'**il présente une masse moléculaire moyenne en nombre (Mn) comprise entre environ 1000 et environ 7000 ; et
B) entre 15 et environ 40 pour cent en masse (par rapport à la masse finale de la composition adhésive thermofusible) d'un ou de plusieurs agents tackifiants, et où, dans la composition adhésive :
C) l'interpolymère homogène éthylène/α-oléfine est en outre **caractérisé en ce qu'**il présente :

i) une densité comprise entre environ 0,880 et environ 0,930 g/cm$^3$ ; et
ii) une viscosité Brookfield (mesurée à 149 °C/300 °F) comprise entre environ 5 et environ 70 grammes/(cm.seconde) (entre environ 500 et environ 7000 cP) ; et

D) la composition adhésive thermofusible est **caractérisée en ce qu'**elle présente :

i) une viscosité Brookfield (mesurée à 177 C/350 °F) comprise entre environ 4 et environ 20 grammes/(cm.seconde) (entre environ 400 et environ 2000 cP) ;
ii) une Température de décollement par pelage (« PAFT ») supérieure ou égale à 43 °C (110°F);et
iii) une Température de décollement par cisaillement (« SAFT ») supérieure ou égale à 60 °C (140 °F).

**13.** Article cellulosique conforme à la Revendication 12 où, dans la composition adhésive thermofusible :

A) l'interpolymère homogène éthylène/α-oléfine est présent à une teneur comprise entre environ 65 et environ 80 pour cent en masse (par rapport à la masse finale de la composition adhésive thermofusible), et l'interpolymère homogène éthylène/α-oléfine est en outre **caractérisé en ce qu'**il présente :

i) une densité comprise entre environ 0,890 et environ 0,920 glcm$^3$ ;
ii) une masse moléculaire moyenne en nombre (Mn) comprise entre environ 1250 et environ 7000 ; et
iii) une viscosité Brookfield (mesurée à 149 °C/300 °F) comprise entre environ 10 et environ 60 grammes/(cm.seconde) (entre environ 1000 et environ 6000 cP) ; et

B) le ou les agents tackifiants sont présents à une teneur comprise entre environ 20 et environ 35 pour cent en masse (par rapport à la masse finale de la composition adhésive thermofusible) ; et où
C) la composition adhésive thermofusible est **caractérisée en ce qu'**elle présente :

i) une viscosité Brookfield (mesurée à 177 °C/350 °F) comprise entre environ 5 et environ 14 grammes/(cm.seconde) (entre environ 500 et environ 1400 cP) ;
ii) une Température de décollement par pelage (« PAFT ») supérieure ou égale à 46 °C (115°F);
iii) une Température de décollement par cisaillement (« SAFT ») supérieure ou égale à 66 °C (150 °F) ; et
iv) 100 % de déchirement du papier à 60 °C (140 °F).

**14.** Article cellulosique conforme à la Revendication 12 où, dans la composition adhésive thermofusible :

A) l'interpolymère homogène éthylène/α-oléfine est en outre **caractérisé en ce qu'**il présente :

i) une densité comprise entre environ 0,893 et environ 0,930 g/$cm^3$ ;
ii) une masse moléculaire moyenne en nombre (Mn) comprise entre environ 1000 et environ 6000 ; et
iii) une viscosité Brookfield (mesurée à 149 °C/300 °F) comprise entre environ 15 et environ 50 grammes/(cm.seconde) (entre environ 1500 et environ 5000 cP) ; et

B) la composition adhésive thermofusible est **caractérisée en ce qu'**elle présente :

i) une viscosité Brookfield (mesurée à 177 °C/350 °F) comprise entre environ 4 et environ 14 grammes/(cm.seconde) (entre environ 400 et environ 1400 cP) ;
ii) une Température de décollement par pelage (« PAFT ») supérieure ou égale à 32 °C (90 °F) ;
iii) une Température de décollement par cisaillement (« SAFT ») supérieure ou égale à 93 °C (200 °F) ; et
iv) 100 % au test de déchirement du papier à 49 °C (120 °F).

**15.** Article cellulosique conforme à la Revendication 14 où, dans la composition adhésive thermofusible :

A) l'interpolymère homogène éthylène/α-oléfine est **caractérisé en ce qu'**il présente :

i) une densité comprise entre environ 0,894 et environ 0,910 g/$cm^3$ ;
ii) une masse moléculaire moyenne en nombre (Mn) comprise entre environ 1100 et environ 5300 ; et
iii) une viscosité Brookfield (mesurée à 149 °C/300 °F) comprise entre environ 16 et environ 32 grammes/(cm.seconde) (entre environ 1600 et environ 3200 cP) ; et

B) la composition adhésive thermofusible est **caractérisée en ce qu'**elle présente :

i) une viscosité Brookfield (mesurée à 177 °C/350 °F) comprise entre environ 7 et environ 12 grammes/(cm.seconde) (entre environ 700 et environ 1200 cP) ;
ii) une Température de décollement par pelage (« PAFT ») supérieure ou égale à 32 °C (90 °F) ;
iii) une Température de décollement par cisaillement (« SAFT ») supérieure ou égale à 93 °C (200 °F) ; et
iv) 100 % au test de déchirement du papier à 60 °C (140 °F).

**16.** Article cellulosique conforme à la Revendication 14 ou 15 où, dans la composition adhésive thermofusible :

A) l'interpolymère homogène éthylène/α-oléfine est un interpolymère d'éthylène et d'une ou de plusieurs α-oléfines en $C_3$-$C_{30}$ ; et
B) le ou les agents tackifiants sont sélectionnés au sein du groupe constitué par les résines hydrocarbonées aliphatiques, les résines hydrocarbonées halogénées, les résines hydrocarbonées aromatiques ou aliphatiques en $C_5$ et les résines hydrocarbonées aromatiques ou aliphatiques en $C_5$ modifiées aromatiques et leurs combinaisons.

**17.** Article cellulosique conforme à la Revendication 16, où, dans la composition adhésive thermofusible) :

A) dans l'interpolymère homogène éthylène/α-oléfine, la α-oléfine est sélectionnée au sein du groupe constitué par $C_3$ (propylène) ; $C_8$ (1-octène) ; $C_{10}$ (1-décèle), $C_{12}$ (1-dodécène), $C_{14}$ (1-duodécène), $C_{14}$ (1-tétradécène), $C_{16}$ (1-hexadécène), $C_{18}$ (1-octadécène), $C_{20-24}$+, $C_{24-28}$ et $C_{30}$, et leurs combinaisons ; et
B) le ou les agents tackifiants sont **caractérisés en ce qu'**ils présentent un indice d'acidité compris entre 0 et environ 25,8.

**18.** Article cellulosique conforme à la Revendication 17, où l'article cellulosique est sélectionné au sein du groupe

constitué par le carton ondulé, le papier kraft, le carton double et le papier.

**19.** Méthode de production d'une composition polymère, la méthode comprenant les étapes de : mélangeage :

d'une quantité comprise entre environ 60 et environ 85 % en masse (par rapport à la masse finale de la composition polymère) d'un interpolymère homogène éthylène/α-oléfine ; l'interpolymère homogène éthylène/α-oléfine étant **caractérisé en ce qu'**il présente :

i) une densité comprise entre environ 0,880 et environ 0,930 g/$cm^3$ ;
ii) une masse moléculaire moyenne en nombre (Mn) comprise entre environ 1000 et environ 7000 ; et
ii) une viscosité Brookfield (mesurée à 149 °C/300 °F) comprise entre environ 5 et environ 70 grammes/(cm.seconde) (entre environ 500 et environ 7000 cP) ; et de

mélangeage d'une quantité comprise entre environ 15 et environ 40 % en masse (par rapport à la masse finale de la composition polymère) d'un agent tackifiant ; et où
la composition polymère est **caractérisée en ce qu'**elle présente :

ii) une viscosité Brookfield (mesurée à 177 °C/350 °F) comprise entre environ 4 et environ 20 grammes/(cm.seconde) (entre environ 400 et environ 2000 cP) ;
ii) une Température de décollement par pelage (« PAFT ») supérieure ou égale à 43 °C (110°F);et
iii) une Température de décollement par cisaillement (« SAFT ») supérieure ou égale à 60 °C (140 °F).

**20.** Méthode conforme à la revendication 19, où :

A) l'interpolymère homogène éthylène/α-oléfine est **caractérisé en ce qu'**il présente :

i) une densité comprise entre environ 0,893 et environ 0,930 g/$cm^3$ ;
ii) une masse moléculaire moyenne en nombre (Mn) comprise entre environ 1000 et environ 6000 ; et
ii) une viscosité Brookfield (mesurée à 149 °C/300 °F) comprise entre environ 15 et environ 50 grammes/(cm.seconde) (entre environ 1500 et environ 5000 cP) ; et

B) la composition polymère est **caractérisée en ce qu'**elle présente :

i) une viscosité Brookfield (mesurée à 177 °C/350 °F) comprise entre environ 4 et environ 14 grammes/(cm.seconde) (entre environ 400 et environ 1400 cP) ;
ii) une Température de décollement par pelage (« PAFT ») supérieure ou égale à 32 °C (90 °F) ;
iii) une Température de décollement par cisaillement (« SAFT ») supérieure ou égale à 93 °C (200 °F) ; et
iv) 100 % au test de déchirement du papier à 60 °C (140 °F).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5021257 A, Foster
- US 5530054 A, Tse
- US 5548014 A, Tse
- US 6107430 A, Dubois
- EP 0886656 B1, Simmons
- US 5272236 A
- US 5278272 A
- US 3645992 A
- US 5064802 A
- US 5132380 A
- US 5703187 A
- US 6034021 A
- EP 0468651 A
- EP 0514828 A
- WO 9319104 A
- WO 9500526 A
- US 5044438 A
- US 5057475 A
- US 5096867 A
- US 5324800 A
- US 5965756 A
- US 6015868 A
- US 230185 A
- US 09715380 B
- US 215456 P
- US 60170175 B
- US 60393862 B
- US 5616664 A
- WO 9623010 A
- WO 9914250 A
- WO 9841529 A
- WO 9742241 A
- EP 0468537 B1
- WO 9722635 A
- EP 0949278 A2
- EP 0949279 A2
- EP 1063244 A2
- US 5408017 A
- US 5767208 A
- US 5907021 A
- WO 8805792 A
- WO 8805793 A
- WO 9325590 A
- US 5599761 A
- US 5218071 A
- WO 9007526 A
- US 5972822 A
- US 6074977 A
- US 6013819 A
- US 5296433 A
- US 4874880 A
- US 5198401 A
- US 5621127 A
- US 5703257 A
- US 5728855 A
- US 5731253 A
- US 5710224 A
- US 5883204 A
- US 5504049 A
- US 5962714 A
- US 5965677 A
- US 5427991 A
- WO 9321238 A
- WO 9403506 A
- WO 9321242 A
- WO 9400500 A
- WO 9600244 A
- WO 9850392 A
- WO 9613530 A
- US SN09230185 A
- US 6150297 A
- US 71538000 A
- EP 277003 A
- US 5153157 A
- EP 468651 A
- US 07547718 B
- EP 520732 A
- US 07876268 B
- US 07884966 B
- US 5625087 A
- US 5556928 A
- US 5150297 A
- WO 02092610 A


### Non-patent literature cited in the description


- Application of Adhesion Model for Developing Hot Melt Adhesives Bonded to Polyolefin Surfaces. *Journal of Adhesion,* 1995, vol. 48 (1-4), 149-167
- Williams and Word in Journal of Polymer Science. *Polymer Letters,* 1968, vol. 6 (621

- **Wild et al.** Journal Of Polymer Science. *Poly. Phys. Ed.,* 1982, vol. 20, 441
- **Randall.** *Rev. Macromol. Chem. Phys.,* vol. C29 (2, 3), 285-297
- **Zimm, G. H. ; Stockmayer, W. H.** *J. Chem. Phys.,* 1949, vol. 17, 1301
- **Rudin, A.** Modem Methods of Polymer Characterization. John Wiley & Sons, 1991, 103-112
- **Scollard et al.** *J. Am. Chem. Soc,* 1996, vol. 118, 10008-10009
- **Wang et al.** *Organometallics,* 1998, vol. 17, 3149-3151
- **Younkin et al.** *Science,* 2000, vol. 287, 460-462
- **Chen ; Marks.** *Chem. Rev.,* 2000, vol. 100, 1391-1434
- **Alt ; Koppl.** *Chem. Rev.,* 2000, vol. 100, 1205-1221
- **Resconi et al.** *Chem. Rev.,* 2000, vol. 100, 1253-1345
- **Ittel et al.** *ChemRev.,* 2000, vol. 100, 1169-1203
- **Coates.** *Chem. Rev.,* 2000, vol. 100, 1223-1251
- *J. Chem. Soc. Chem. Comm.,* 1993, 383-384
- **Lambert, J. B. et al.** *Organometallics,* 1994, vol. 13, 2430-2443